(19) Europäisches Patentamt
European Patent Office
Office européen des brevets

(11) **EP 3 736 107 A1**

(12) **EUROPEAN PATENT APPLICATION**

(43) Date of publication:
**11.11.2020 Bulletin 2020/46**

(51) Int Cl.:
**B29C 64/118** (2017.01)  **B29C 64/295** (2017.01)
**B29C 64/393** (2017.01)  **B33Y 10/00** (2015.01)
**B33Y 30/00** (2015.01)  **B33Y 50/02** (2015.01)

(21) Application number: **20157074.4**

(22) Date of filing: **13.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.02.2019 JP 2019026808**
**01.11.2019 JP 2019199951**

(71) Applicant: **Ricoh Company, Ltd.**
**Tokyo 143-8555 (JP)**

(72) Inventors:
• **ARAO, Tsuyoshi**
**Tokyo, 143-8555 (JP)**
• **ITO, Yoichi**
**Tokyo, 143-8555 (JP)**

• **TAKAI, Atsushi**
**Tokyo, 143-8555 (JP)**
• **TAKEYAMA, Yoshinobu**
**Tokyo, 143-8555 (JP)**
• **NAKAMURA, Soichi**
**Tokyo, 143-8555 (JP)**
• **TSUJI, Masato**
**Tokyo, 143-8555 (JP)**
• **NAKAYAMA, Hirotoshi**
**Tokyo, 143-8555 (JP)**
• **HAYAKAWA, Shota**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **FABRICATING APPARATUS, FABRICATING METHOD, AND FABRICATING SYSTEM**

(57) A fabricating apparatus (10) is configured to fabricate a three-dimensional object. The fabricating apparatus includes a discharging device (13), a heating device (23), and a controller. The discharging device (13) configured to discharge a fabrication material to form a fabrication material layer. The heating device (23) is configured to heat the fabrication material layer formed by the discharging device (13). The controller is configured to control at least one of a heating range of the fabrication material layer heated by the heating device (23) and a heating energy applied to the fabrication material layer by the heating device (23) when the discharging device (13) discharges the fabrication material to laminate another fabrication material layer on the fabrication material layer heated by the heating device (23).

FIG. 1

EP 3 736 107 A1

**Description**

BACKGROUND

Technical Field

Aspects of the present disclosure relate to an apparatus, a method, and a system for fabricating a three-dimensional object.

Related Art

A three-dimensional fabricating apparatus such as a three-dimensional (3D) printer stacks materials without using a mold or the like, to form a three-dimensional object. As the fabricating method, there are known, for example, an optical fabricating method, a powder sintering laminating method, a fused deposition modeling method, and an inkjet method. In such methods, for example, a laser light is applied to a fabrication material to melt the fabrication material and bond layers of the fabrication material or cure the fabrication material to form the layers one by one.

For example, as a fabricating technique using a fused deposition modeling method, in order to increase the welding strength between the layers, there has been proposed a technique of heating a resin material of the previous layer when extruding a molten resin from a discharger to form a layer (for example, see JP-2005-335380-A).

However, in the above-described technology, thermal energy is input by laser light or the like to heat the material. If the input thermal energy is excessive, the material is degraded, and if the input thermal energy is too small, there is a problem that the adhesiveness between layers is reduced.

In addition, since the shape and the like of a fabricated surface differ depending on each layer, there is also a problem that the deformation occurs unless the input range of the thermal energy is changed for each layer.

SUMMARY

In view of the above-described problems, an object of the present disclosure is to provide an apparatus, a method, and a system that can restrain the occurrence of degradation or deformation of a material and enhance the adhesiveness between layers.

In an aspect of the present disclosure, there is provided a fabricating apparatus configured to fabricate a three-dimensional object. The fabricating apparatus includes a discharging device, a heating device, and a controller. The discharging device configured to discharge a fabrication material to form a fabrication material layer. The heating device is configured to heat the fabrication material layer formed by the discharging device. The controller is configured to control at least one of a heating range of the fabrication material layer heated by the heating device and a heating energy applied to the fabrication material layer by the heating device when the discharging device discharges the fabrication material to laminate another fabrication material layer on the fabrication material layer heated by the heating device.

In another aspect of the present disclosure, there is provided a fabricating system for fabricating a three-dimensional object. The system includes the above-described fabricating apparatus.

In still another aspect of the present disclosure, there is provided a method of fabricating a three-dimensional object. The method includes discharging, heating, and controlling. The discharging discharges a fabrication material to form a fabrication material layer. The heating heats the fabrication material layer formed by the discharging. The controlling controls at least one of a heating range of the fabrication material layer heated by the heating and a heating energy applied to the fabrication material layer by the heating, when discharging the fabrication material to laminate another fabrication material layer on the fabrication material layer heated by the heating.

According to the present disclosure, the occurrences of degradation, deformation, etc., of a material can be restrained and the adhesiveness between layers can be enhanced.

BRIEF DESCRIPTION OF THE DRAWINGS

The aforementioned and other aspects, features, and advantages of the present disclosure would be better understood by reference to the following detailed description when considered in connection with the accompanying drawings, wherein:

FIG. 1 is a diagram illustrating a configuration example of a fabricating apparatus according to an embodiment of the present disclosure;
FIG. 2 is a diagram illustrating a configuration example of a discharge module included in the fabricating apparatus;
FIG. 3 is a diagram illustrating an example of a hardware configuration of the fabricating apparatus;

FIG. 4 is a diagram illustrating an example of an operation of heating a lower layer;

FIG. 5 is a diagram illustrating an example of the arrangement of a non-contact type thermography used as a detecting device;

FIG. 6 is a diagram illustrating an example of the arrangement of a contact thermocouple used as a detecting device;

FIG. 7 is a plan view of a heating module included in the fabricating apparatus as viewed from a fabricating table side;

FIG. 8 is a block diagram illustrating a configuration example of a controller;

FIG. 9 is a flowchart illustrating a first example of a lower layer heating process performed by the controller;

FIG. 10 is a flowchart illustrating a second example of the lower layer heating process performed by the controller;

FIG. 11 is a flowchart illustrating a third example of the lower layer heating process performed by the controller;

FIG. 12 is a flowchart illustrating a fourth example of the lower layer heating process performed by the controller;

FIG. 13 is a diagram illustrating a relationship between a lamination interface temperature and time;

FIGS. 14A and 14B are diagrams illustrating a heating range;

FIG. 15 is a diagram illustrating examples of changing the heating range;

FIG. 16 is a diagram illustrating an example of heating in consideration of a shape;

FIG. 17 is a diagram illustrating a first example of a method of changing the heating range;

FIG. 18 is a diagram illustrating a second example of a method of changing the heating range;

FIG. 19 is a diagram illustrating a third example of a method of changing the heating range;

FIG. 20 is a diagram illustrating an example of a method of changing the heating range using a hot air nozzle;

FIG. 21 is a diagram illustrating an example of a method of changing the heating range using an iron;

FIG. 22 is a diagram illustrating an example of a method of changing the heating range using a halogen lamp;

FIG. 23 is a diagram illustrating another example of the operation of heating a lower layer;

FIGS. 24A and 24B are diagrams illustrating an example of a filament in which constituent materials are unevenly distributed;

FIG. 25 is a diagram illustrating an example of the fabricating apparatus including a regulating device;

FIG. 26 is a flowchart illustrating an example of a process of regulating the direction of the filament;

FIG. 27 is a diagram illustrating an example of a fabrication object fabricated by the fabricating apparatus;

FIG. 28 is a graph illustrating a relationship between a surface temperature of a portion irradiated with a laser and an elapsed time;

FIG. 29 is a diagram illustrating another configuration example of the fabricating apparatus;

FIG. 30 is a diagram in which three points of movement of the nozzle are cut out in an XY coordinate system; and

FIG. 31 is a diagram illustrating a position at which a laser is emitted with respect to the center of the nozzle. The accompanying drawings are intended to depict embodiments of the present disclosure and should not be interpreted to limit the scope thereof. The accompanying drawings are not to be considered as drawn to scale unless explicitly noted.

## DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Although the embodiments are described with technical limitations with reference to the attached drawings, such description is not intended to limit the scope of the disclosure and all of the components or elements described in the embodiments of this disclosure are not necessarily indispensable.

Referring now to the drawings, embodiments of the present disclosure are described below. In the drawings for explaining the following embodiments, the same reference codes are allocated to elements (members or components) having the same function or shape and redundant descriptions thereof are omitted below.

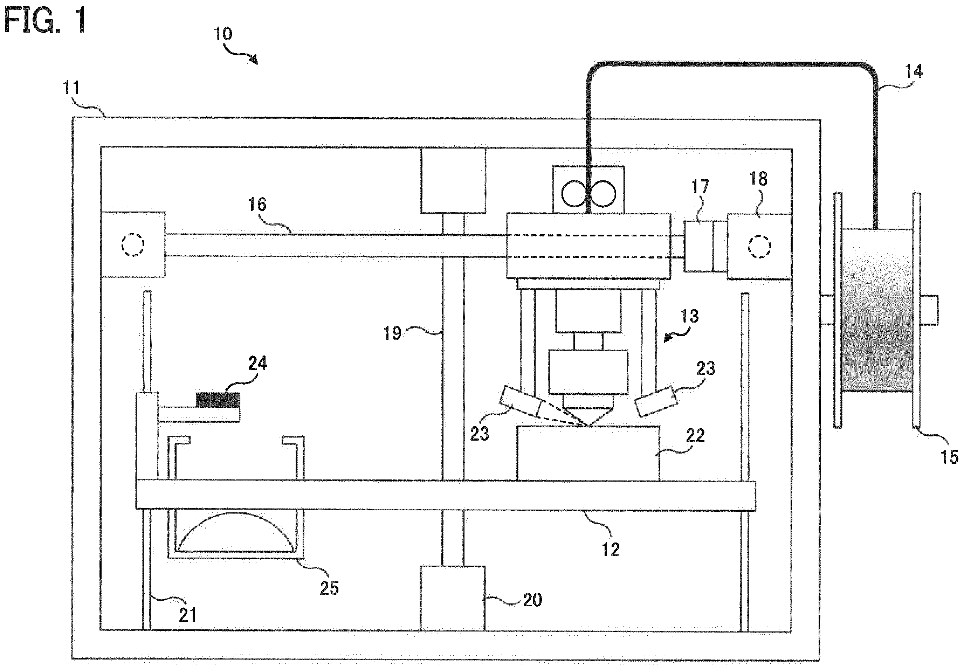

FIG. 1 is a schematic view of an example configuration of a fabricating apparatus according to an embodiment of the present disclosure. The fabricating apparatus is an apparatus that fabricates a three-dimensional object, and is usable together with an information processing apparatus that inputs, as fabricating information, three-dimensional shape information, setting information such as a material to be used and a width of discharging a material, and the like, to the fabricating apparatus to constitute a fabricating system. The fabricating apparatus and the information processing apparatus are connected by wire using a cable or the like, or wirelessly using a wireless LAN or the like. The information processing apparatus and the fabricating apparatus may be connected via a network.

The fabricating system may be configured with one apparatus in which the functions of the information processing apparatus and a fabricating means for fabricating a three-dimensional object are stored in one housing. The fabricating system may be configured with three or more apparatuses, including the fabricating apparatus, in which the functions of the information processing apparatus are distributed in two or more apparatuses.

The fabricating apparatus 10 illustrated in FIG. 1 is an apparatus that performs fabrication by, for example, a fused deposition modeling. However, the fabricating method is not limited to such a fused deposition modeling and may be another method of laminating a thermoplastic material. The fabricating apparatus 10 discharges a fabrication material based on fabricating information without using a mold, to form a fabrication material layer. The fabricating apparatus 10 stacks a plurality of fabrication material layers to form a three-dimensional object (a fabrication object).

The fabricating apparatus 10 includes a housing 11. The housing 11 provides a processing space for forming a fabrication object. A fabricating table 12 as a mount table is provided in the housing 11. A fabrication object is fabricated on the fabricating table 12. The fabricating table 12 may be provided with a heating unit to heat the fabricated object.

The fabricating apparatus 10 includes a discharge module 13 as a discharging device in the housing 11 to discharge a fabrication material. As the fabrication material, a thermoplastic resin composition is used as an example. The fabricating apparatus 10 uses a solid, elongated linear resin composition (filament) 14 to make the filament 14 into a molten state (liquid state) or a semi-molten state (solid-liquid coexistence state), and to extrude and discharge the filament 14 to form a fabrication material layer. For this reason, the fabricating apparatus 10 includes a reel 15 outside the housing 11. The filament 14 is wound around the reel 15. The reel 15 rotates as the filament 14 is drawn by the discharge module 13.

The fabricating apparatus 10 includes an X-axis drive shaft 16 and an X-axis drive motor 17. The X-axis drive shaft 16 holds the discharge module 13 to be slidable in a horizontal direction and an arbitrary direction (X-axis direction). The X-axis drive motor 17 moves the discharge module 13 in the X-axis direction. The fabricating apparatus 10 also includes a Y-axis drive motor 18 to move the X-axis drive shaft 16 and the X-axis drive motor 17 in a horizontal direction and a direction perpendicular to the X-axis direction (Y-axis direction).

The fabricating apparatus 10 includes a Z-axis drive shaft 19 and a Z-axis drive motor 20. The Z-axis drive shaft 19 holds the fabricating table 12 to be slidable in a vertical direction (Z-axis direction). The Z-axis drive motor 20 moves the fabricating table 12 in the Z-axis direction. The fabricating apparatus 10 further includes a guide shaft 21 extending through an edge portion of the fabricating table 12 in the Z-axis direction so that the fabricating table 12 does not tilt when the fabricating table 12 moves in the Z-axis direction.

With such mechanisms, the fabricating apparatus 10 repeats an operation of lowering the fabricating table 12 by one step each time the fabricating apparatus 10 discharges the filament 14 from the discharge module 13, while changing the horizontal discharge position of the discharge module 13, to form one layer. Thus, a fabrication object 22 of a three-dimensional shape can be formed.

The fabrication object 22 is fabricated by laminating fabrication material layers. Even when the molten or semi-molten filament 14 is discharged on a solidified lower layer to form an upper layer adjacent to the lower layer, the adhesiveness between the layers may be low. The adhesiveness can be enhanced by heating the lower layer to reduce the difference between the lower layer and the temperature of the discharged filament 14 so that the lower layer and the filament 14 are mixed.

Therefore, the fabricating apparatus 10 includes a heating module 23 in the housing 11. The heating module 23 as a heating device heats a layer of the filament 14 formed on the fabricating table 12. The heating module 23 is connected to the discharge module 13 and moves in the horizontal direction together with the discharge module 13. When the discharge module 13 discharges the filaments 14 to form a fabrication material layer, the heating module 23 heats a preceding fabrication material layer (lower layer) that has been formed immediately before.

The fabricating apparatus 10 may further include a cleaning brush 24. The cleaning brush 24 cleans the periphery of a discharge nozzle of the discharge module 13 that is contaminated with molten resin when the melting and discharging of the filament 14 are continued over time. Such a configuration can prevent the resin from sticking to the tip of the discharge nozzle, thus allowing the resin to be discharged with an appropriate width. The cleaning operation using the cleaning brush 24 is preferably performed before the temperature of the resin has completely fallen from the viewpoint of preventing the resin from sticking. Therefore, the cleaning brush 24 is preferably made of a heat-resistant member.

In the cleaning operation, the removed resin solidifies, and abrasive powder is generated. Therefore, the fabricating apparatus 10 may include a dust box 25 to accumulate the generated abrasive powder. The fabricating apparatus 10 is not limited to the configuration in which the dust box 25 is provided to periodically discard the abrasive powder but may be a configuration in which a suction path is provided to suck and deliver the generated abrasive powder to the outside.

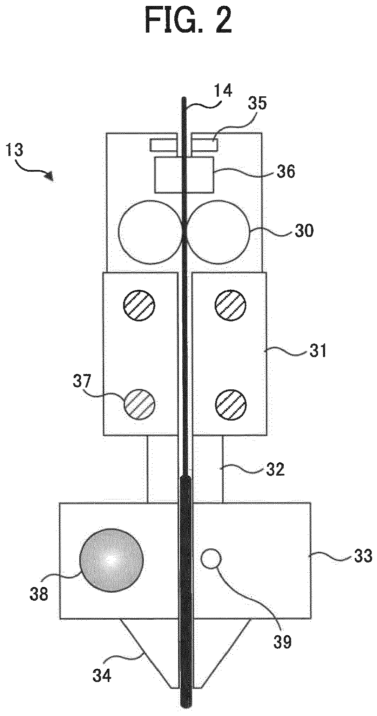

FIG. 2 is a diagram illustrating a configuration example of the discharge module 13. The discharge module 13 is provided above the fabricating table 12 and includes an extruder 30, a cooling block 31, a filament guide 32, a heating block 33, and a discharge nozzle 34. The discharge module 13 may include other components such as an imaging module 35 and a torsional rotation mechanism 36.

The extruder 30 acts as a driving device of the filament 14, rotates itself, draws the filament 14 from the reel 15, and supplies the filament 14 to the fabricating table 12 below the extruder 30.

The cooling block 31 is provided above the heating block 33 and spaced apart from the heating block 33. The cooling block 31 includes cooling sources 37 and cools the filament 14 supplied by the extruder 30. Such a configuration prevents an upward backflow of the filament 14 heated and melted by the heating block 33 below the cooling block 31, an increase in resistance in extruding the filament 14, and a clogging in a transfer path due to the solidification of the filament 14.

The filament guide 32 is provided between the cooling block 31 and the heating block 33, is made of a heat insulating material, and restrains the heat of the heating block 33 from being transmitted to an upper side of the filament guide 32.

The heating block 33 includes a heat source 38 such as a heater and a thermocouple 39 that is one of temperature measuring means to measure the temperature of the heat source 38. The heating block 33, together with the cooling block 31 and the filament guide 32, forms a transfer path through which the filament 14 passes, and heats the filament 14 supplied via the transfer path to bring the filament 14 into a molten state or a semi-molten state and send the filament 14 to the discharge nozzle 34.

The discharge nozzle 34 is provided opposite an upper surface of the fabricating table 12, and discharges the filament 14 supplied from the heating block 33 so as to linearly extrude the filament 14 onto the fabricating table 12. The discharged filament 14 is naturally cooled and solidified to form a layer having a predetermined shape. The discharge nozzle 34 repeatedly discharges the filament 14 so that the filament 14 is linearly extruded onto the formed layer, and stacks layers to form a fabrication object of a three-dimensional shape.

The number of discharge nozzle 34 may be one, or two or more. When two discharge nozzles 34 are provided, the first nozzle may be a nozzle to discharge a filament of a model material constituting a fabrication object and the second nozzle may be a nozzle to discharge a filament of a support material that supports the model material. The model material and the support material are usually different materials, and the support material is finally removed.

The imaging module 35 is provided as needed and captures an omnidirectional image of the filament 14 drawn into the discharge module 13. In the example illustrated in FIG. 2, two imaging modules 35 are provided with the filament 14 interposed between the imaging modules 35, but the configuration of the imaging module(s) is not limited to such a configuration. For example, a 360° image may be captured by one imaging module using a reflector or the like, or may be shared and captured by three or more imaging modules and combined to form a 360° image. As the imaging module 35, a camera including an imaging optical system such as a lens and an imaging device such as a charge-coupled device (CCD) sensor or a complementary metal oxide semiconductor (CMOS) sensor may be used.

The torsional rotation mechanism 36 is configured with a roller and is provided as needed. The torsional rotation mechanism 36 rotates the filament 14 drawn into the discharge module 13 in the width direction of the filament 14 to regulate the direction of the filament 14.

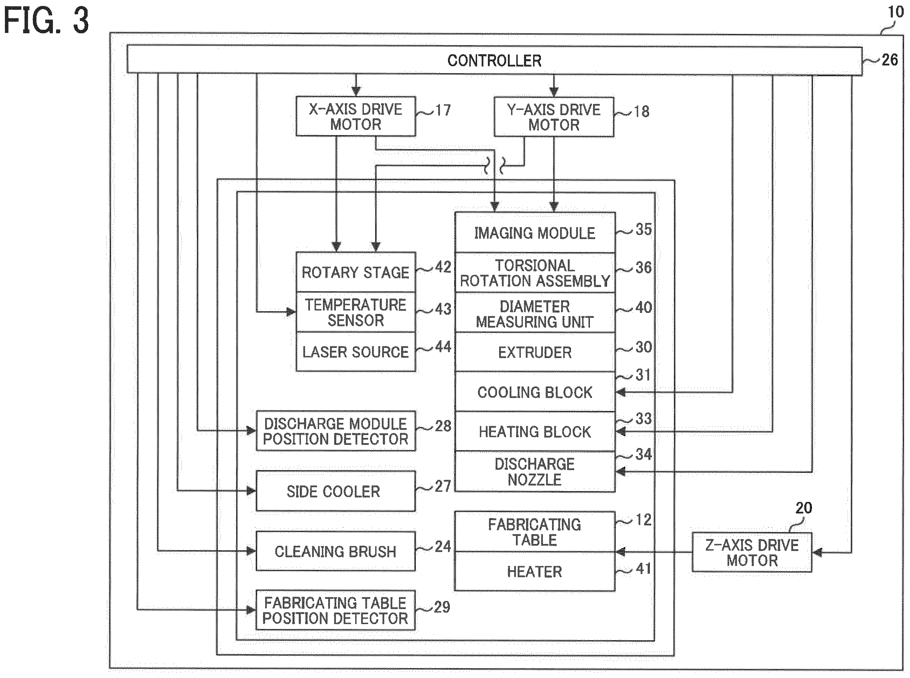

FIG. 3 is a diagram illustrating an example of a hardware configuration of the fabricating apparatus 10 other than a laser source and a driving unit of the laser source. The fabricating apparatus 10 includes, as hardware, the fabricating table 12, the discharge module 13, the X-axis drive motor 17, the Y-axis drive motor 18, the Z-axis drive motor 20, and the cleaning brush 24. In addition, the fabricating apparatus 10 includes a controller 26, a side cooler 27, a discharge module position detector 28, and a fabricating table position detector 29.

As illustrated in FIG. 2, the discharge module 13 includes the extruder 30, the cooling block 31, the heating block 33, the discharge nozzle 34, the imaging module 35, the torsional rotation mechanism 36. The discharge module 13 further includes a diameter measuring unit 40. The diameter measuring unit 40 measures the width of the filament 14 between the edges of the filament 14 in each of the two directions of the X-axis and the Y-axis as a diameter from the image of the filament 14 captured by the imaging module 35. The diameter measuring unit 40 outputs error information when detects a nonstandard diameter deviated a reference value.

The fabricating table 12 is provided with a heating unit 41 as needed. The heating module 23 includes a rotary stage 42, a temperature sensor 43, and a laser source 44. The side cooler 27 is, for example, a fan and is provided as needed. When the heating module 23 heats the filaments 14, the side cooler 27 cools a side surface of a fabrication object to stack the filaments 14 while maintaining the shape of the fabrication object.

The controller 26 includes a CPU, a memory, and the like, and is electrically connected to each unit. The discharge module position detector 28 is a position detection sensor or the like and detects the positions of the discharge module 13 in the X-axis direction and the Y-axis direction. The fabricating table position detector 29 is also a position detection sensor or the like and detects the position of the fabricating table 12 in the Z-axis direction. The controller 26 receives the detection results, controls the driving of the X-axis drive motor 17, the Y-axis drive motor 18, and the Z-axis drive motor 20, and moves the discharge module 13 and the fabricating table 12 to target positions.

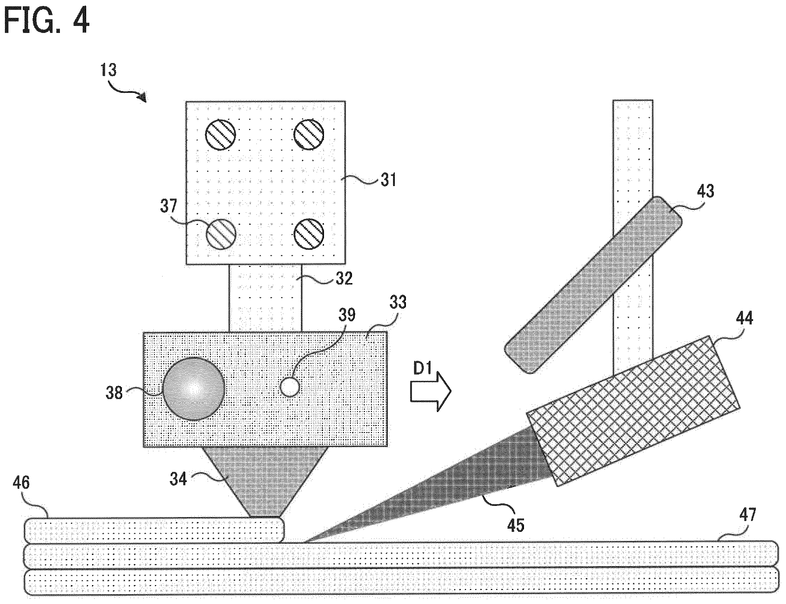

FIG. 4 is a diagram illustrating an example of the operation of heating a lower layer. Here, a description is given of a method of heating using a laser light 45. When an upper layer 46 is formed by the discharge module 13, the laser source 44 emits the laser light 45 to a position just ahead of a position to which the filament 14 is discharged in a lower layer 47 just under the upper layer 46, to heat a portion at the position. The position just ahead of a position to which the filament 14 is discharged refers to a position slightly shifted in a direction indicated by arrow D1 in FIG. 4 within a predetermined distance from the current position of the discharge nozzle 34 moving in the direction indicated by arrow D1. In such a case, the molten filament 14 is discharged to form the lower layer 47, and after the lower layer 47 is cooled and solidified, the lower layer 47 is heated.

**EP 3 736 107 A1**

The heating temperature of the lower layer 47 is not particularly limited but is preferably equal to or higher than the melting temperature of the filament 14 constituting the lower layer 47.

Before the lower layer 47 is heated, the temperature of the portion to be heated is measured by the temperature sensor 43. The temperature sensor 43 is arranged at any position at which the temperature of the surface of the lower layer before heating can be measured. In the example illustrated in FIG. 4, the temperature sensor 43 is disposed vertically above the laser source 44. The controller 26 acquires the temperature measured by the temperature sensor 43 and controls the output of the laser source 44 based on the acquired temperature. Such a configuration allows the temperature of the lower layer 47 to be heated to a predetermined temperature.

As another method, the temperature of the lower layer 47 during the heating may be measured by the temperature sensor 43, and the laser source 44 may output a laser light until the measurement result reaches a predetermined temperature. In such a case, the position of the temperature sensor 43 may be any position where the heating surface can be measured. The temperature sensor 43 may be any known device, and may be a contact type or a non-contact type.

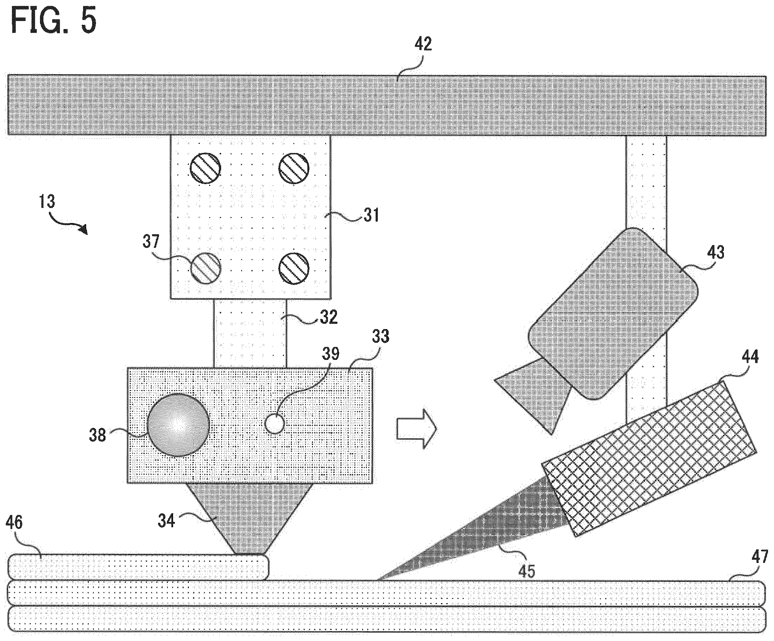

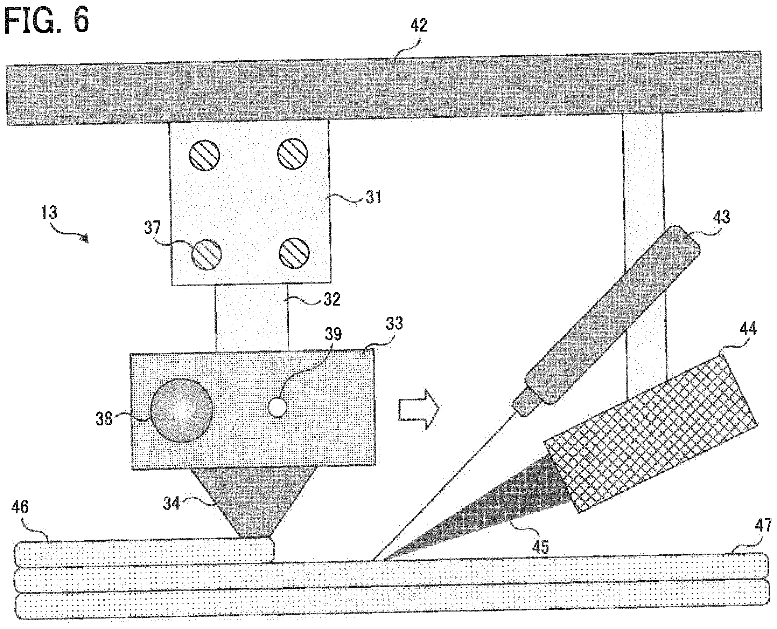

FIG. 5 is a diagram illustrating an example in which a thermography is used as the non-contact type temperature sensor 43. The thermography is a device that analyzes infrared rays radiated from the lower layer 47 to be measured and displays an image as a heat distribution. FIG. 6 is a diagram illustrating an example in which a thermocouple is used as the contact-type temperature sensor 43. The thermocouple is a temperature sensor that joins both ends of two different types of conductors, keeps one contact point at a constant temperature, and measures the temperature from the magnitude of the current generated when the temperature of the other contact point is changed.

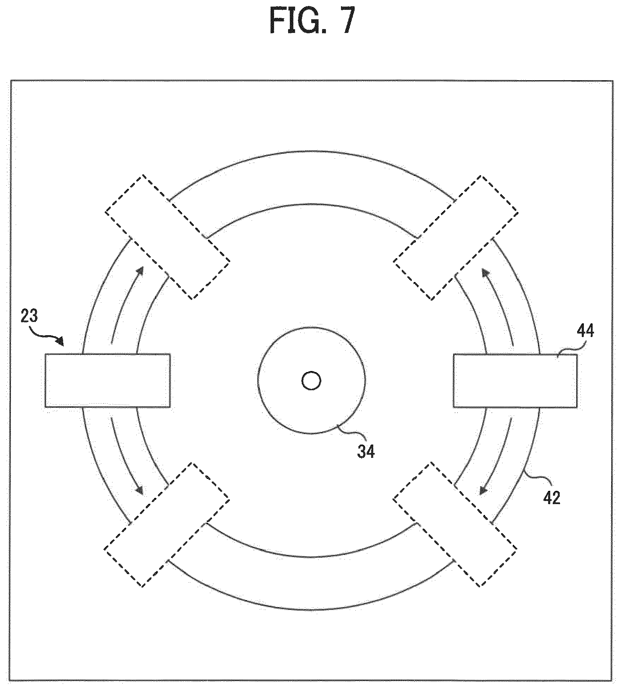

FIG. 7 is a plan view of the heating module 23 at an upper side viewed from the fabricating table 12. The heating module 23 is attached to the rotary stage 42. The rotary stage 42 rotates around the discharge nozzle 34 in a certain direction.

At least one laser source 44 is attached to the rotary stage 42 and rotates with the rotation of the rotary stage 42. Therefore, even if the direction of movement of the discharge nozzle 34 changes, the laser source 44 can move ahead of the discharge position of the discharge nozzle 34 to emit laser light to the lower layer 47.

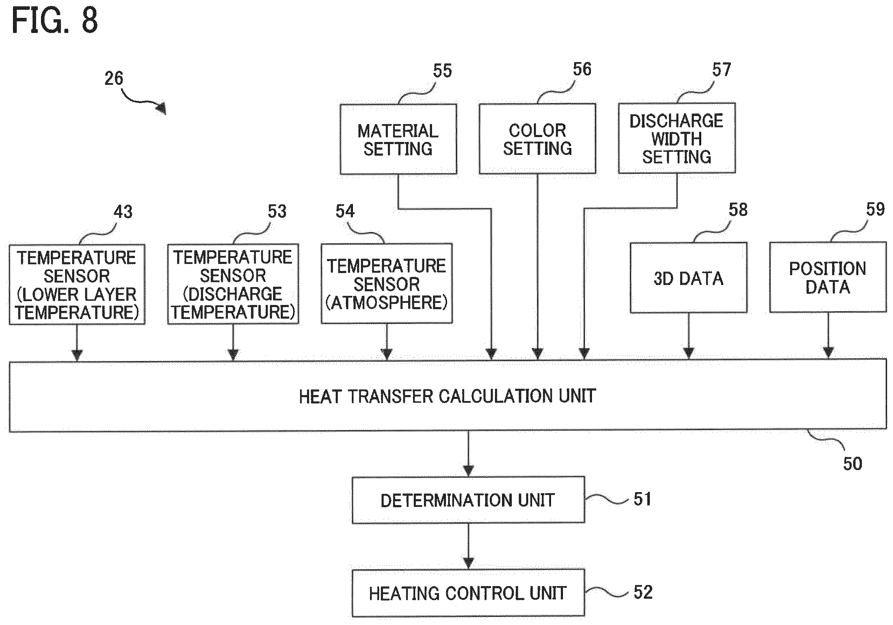

FIG. 8 is a diagram illustrating functions performed by the controller 26. The controller 26 generates function units to perform functions by a central processing unit (CPU) executing programs and includes, e.g., a heat transfer calculation unit 50, a determination unit 51, and a heating control unit 52 as the function units. Note that a part or all of the functional units may be achieved by hardware such as a circuit.

The heat transfer calculation unit 50 receives inputs from various temperature sensors 43, 53, and 54 and receives inputs of various setting data 55 to 57. The temperature sensor 53 is a sensor that measures the discharge temperature of the material discharged from the discharge nozzle 34. The temperature sensor 54 is a sensor that measures a fabricating atmosphere temperature in the housing 11. The setting data 55 is data representing the type of material. The setting data 56 is data representing the color of the material. The setting data 57 is data defining the discharge width of the material.

In addition, the heat transfer calculation unit 50 also receives input of three-dimensional shape data (3D data) 58 representing a fabrication shape and position data 59 representing a progress of the fabrication with a fabricating position. The position data 59 is input from the discharge module position detector 28 and the fabricating table position detector 29 illustrated in FIG. 3. Note that the information described above is an example and may include information other than the above-described information, or some of the information may be changed.

The heat transfer calculation unit 50 calculates the amount of heat necessary for heating the lower layer 47 using the input information. The calculation is performed because the amount of heat necessary for heating the lower layer 47 varies depending on the lower layer temperature, the material discharge temperature, the fabricating atmosphere temperature, the fabrication shape, and the fabricating position. The fabricating atmosphere temperature affects the lower layer temperature and the material discharge temperature. The heat capacity of the fabrication shape differs between, for example, a thin shape and a thick shape. Regarding the fabricating position, the state of heat diffusion differs between, for example, at the end and the center.

Regarding the amount of heat necessary for heating the lower layer 47, for example, the temperature of the interface (lamination interface temperature) between the upper layer 46 and the lower layer 47 or the heat absorption amount of the lower layer 47 is calculated based on the lower layer temperature, the material discharge temperature, and the fabricating atmosphere temperature. Then, the amount of heat necessary for heating the lower layer 47 can be calculated as heat energy based on the calculated lamination interface temperature or heat absorption. The lamination interface temperature or heat absorption can be calculated using the heat capacity of the material. As described below, the amount of heat is calculated as an amount of heat needed to bring the lamination interface temperature to any temperature above the glass transition point of the material. Any calculation formula known so far can be used as a calculation formula for calculating the amount of heat. Note that the amount of heat needed changes with the heat absorption rate depending on the type and color of the material, and the heating area changes with the discharge width. Therefore, the amount of heat needed may be calculated with the setting information of the type and color of the material and the discharge width.

The determination unit 51 determines a heating range of the lower layer 47 based on the amount of heat calculated by the heat transfer calculation unit 50. The heating control unit 52 controls the heating module 23 to heat the determined heating range.

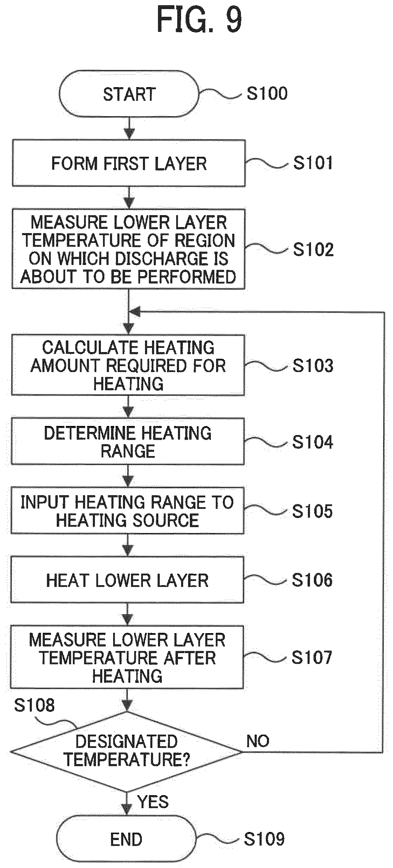

FIG. 9 is a flowchart illustrating a first example of a process of heating the lower layer 47. The process starts from step S100, and in step S101, the melted filament 14 is discharged onto the fabricating table 12 to form a first layer. The layer is formed based on the fabricating data of each layer generated by slicing 3D data into a plurality of pieces of data.

In step S102, when the material is discharged onto the formed layer to form the upper layer 46, the temperature of the lower layer 47 at a position just ahead of the position to which the material is discharged is measured by the temperature sensor 43.

In step S103, the heat transfer calculation unit 50 calculates the amount of heat necessary for heating the lower layer 47 based on the measured temperature data. In step S104, the determination unit 51 determines the heating range of the lower layer 47 based on the amount of heat calculated by the heat transfer calculating unit 50. In step S105, the heating control unit 52 instructs the heating module 23 as the heating source to perform heating to heat the heating range determined by the determination unit 51.

In step S106, the heating module 23 emits a laser light to the designated heating range in accordance with the instruction received from the heating control unit 52 to heat the designated heating range. In step S107, the temperature of the heating range after the heating is measured by the temperature sensor 43.

In step S108, the heating control unit 52 checks whether the measured temperature has reached a designated temperature. If the measured temperature has not reached the designated temperature (NO in step S108), the process returns to step S103 to calculate the amount of heat necessary for heating. That is, feedback is performed until the measured temperature reaches the designated temperature. If the measured temperature has reached the designated temperature (YES in step S108), the process proceeds to step S109 and the heating process is terminated.

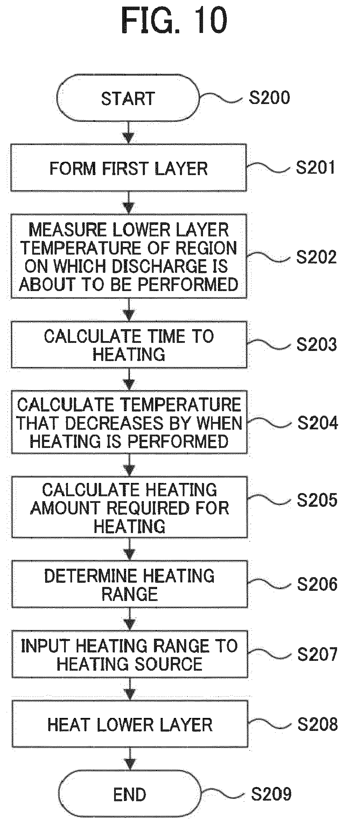

FIG. 10 is a flowchart illustrating a second example of the process of heating the lower layer 47. The process is a feedforward process that does not perform feedback as illustrated in FIG. 9. Starting from step S200, in step S201, the melted filament 14 is discharged onto the fabricating table 12 to form a first layer. In step S202, when the upper layer 46 is formed, the temperature of the lower layer 47 at a position just ahead of the position to which the material is discharged is measured by the temperature sensor 43.

In step S203, the heat transfer calculation unit 50 calculates the time from the measurement of the temperature in step S202 to the heating based on the input 3D data 58 and the position data 59. In step S204, the heat transfer calculation unit 50 calculates, based on the calculated time, to what extent the lower layer temperature decreases before the heating. In step S205, the heat transfer calculation unit 50 calculates the amount of heat necessary for heating the lower layer 47 from the calculated temperature. Since the amount of heat is calculated in consideration of the temperature decrease before the heating, the exact amount of heat necessary for the heating can be calculated, thus obviating the feedback as illustrated in FIG. 9.

In step S206, the determination unit 51 determines the heating range of the lower layer based on the amount of heat calculated by the heat transfer calculation unit 50. In step S207, the heating control unit 52 instructs the heating module 23 to perform heating to heat the heating range determined by the determination unit 51.

In step S208, the heating module 23 emits a laser light to the designated heating range in accordance with the instruction received from the heating control unit 52 to heat the designated heating range, and in step S209 the heating process ends.

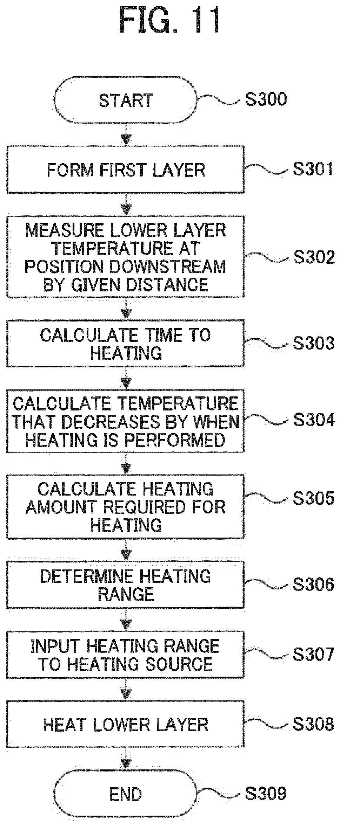

FIG. 11 is a flowchart illustrating a third example of the process of heating the lower layer 47. The process is also a feedforward process, like the process illustrated in FIG. 10. Starting from step S300, in step S301, the melted filament 14 is discharged onto the fabricating table 12 to form a first layer. In step S302, when the upper layer 46 is formed, the temperature sensor 43 measures the pre-discharge temperature of the lower layer 47 at a position that is away by an arbitrary distance in the moving direction of the discharge nozzle 34 from the position at which the filament 14 is discharged.

In step S303, the heat transfer calculation unit 50 calculates the time from the measurement of the temperature in step S302 to the heating based on the input 3D data 58 and the position data 59. In step S304, the heat transfer calculation unit 50 calculates, based on the calculated time, to what extent the lower layer temperature decreases before the heating. In step S305, the heat transfer calculation unit 50 calculates the amount of heat necessary for heating the lower layer 47 from the calculated temperature.

In step S306, the determination unit 51 determines the heating range of the lower layer 47 based on the amount of heat calculated by the heat transfer calculating unit 50. In step S307, the heating control unit 52 instructs the heating module 23 to perform heating to heat the heating range determined by the determination unit 51.

In step S308, the heating module 23 emits a laser light to the designated heating range in accordance with the instruction received from the heating control unit 52 to heat the designated heating range, and in step S309 the heating process ends.

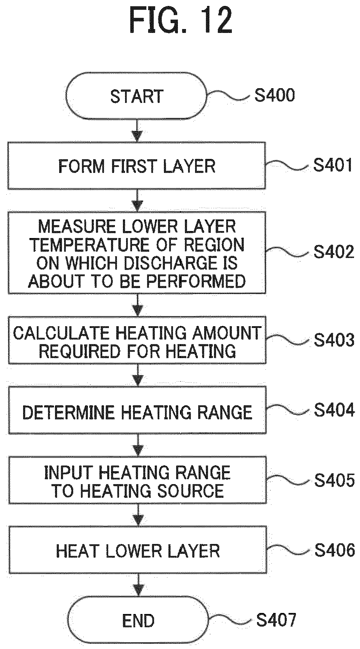

FIG. 12 is a flowchart illustrating a fourth example of the process of heating the lower layer 47. The process is also a feedforward process, like the processes illustrated in FIGS. 10 and 11. Starting from step S400, in step S401, the melted filament 14 is discharged onto the fabricating table 12 to form a first layer. In step S402, when the upper layer 46 is formed, the temperature of the lower layer 47 at a position just ahead of the position to which the material is discharged is measured by the temperature sensor 43.

In step S403, the heat transfer calculation unit 50 calculates the amount of heat necessary for heating the lower layer 47 based on the measured temperature data. In step S404, the determination unit 51 determines a heating range of the lower layer 47 based on the heat amount calculated by the heat transfer calculation unit 50. In step S405, the heating control unit 52 instructs the heating module 23 to perform heating to heat the heating range determined by the determination unit 51.

In step S406, the heating module 23 emits a laser light to the designated heating range in accordance with the instruction received from the heating control unit 52 to heat the designated heating range, and in step S407 the heating process ends.

In the fourth example, as in the first example illustrated in FIG. 9, the temperature of the lower layer 47 at a position just ahead of the position to which the material is discharged is measured, and the amount of heat is calculated based on the temperature data. Since no feedback is performed, the process is simplified. However, the heat amount is calculated with a certain margin to ensure that the lower layer is in a molten state or a semi-molten state.

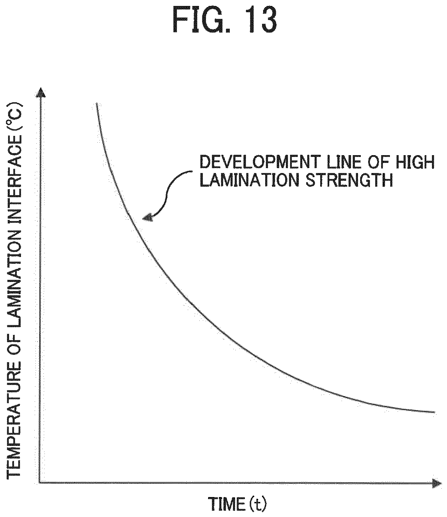

FIG. 13 is a diagram illustrating the relationship between the lamination interface temperature and time, which is used for calculating the amount of heat. The lamination interface temperature and time are important parameters resulting from the development of the strength of the formed layer. When the lamination interface temperature is a given temperature equal to or higher than the glass transition point and a certain period of time is spent, the resins at the lamination interface are mixed with each other, thus allowing the strength of the lamination interface to be enhanced. The glass transition point is a temperature at which the rigidity and viscosity of the fabrication material decreases and the fluidity increases. In FIG. 13, the strength expression line indicates a boundary at which the lamination interface strength develops. Therefore, when the product of a certain temperature and time exceeds the strength development line illustrated by the curve in FIG. 13, the lamination interface strength can be enhanced.

The heat transfer calculation unit 50 calculates the amount of heat necessary for heating so as to exceed the strength development line. Regarding the amount of heat, for example, the lamination interface temperature obtained when the material is discharged without heating is calculated from the measured material discharge temperature, lower layer temperature, ambient temperature, etc. The amount of heat is calculated as the amount of heat necessary for raising the lamination interface temperature to any temperature exceeding the strength development line.

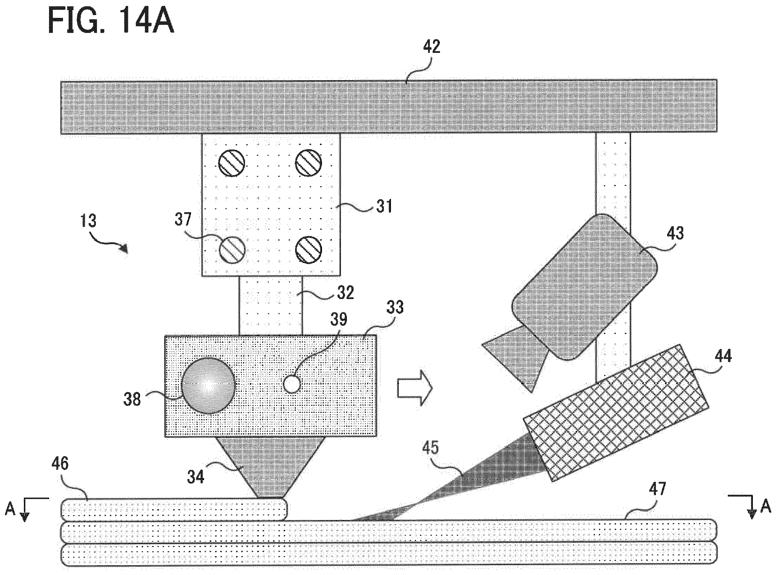

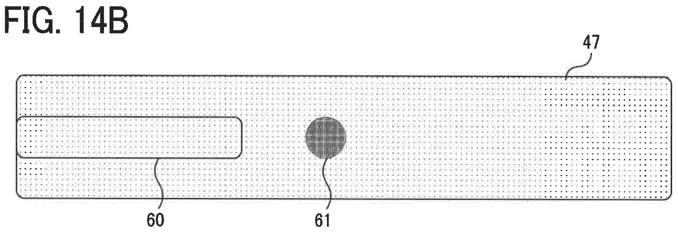

FIGS. 14A and 14B are diagrams illustrating a heating range. FIG. 14A is a front view illustrating a state in which a lower layer 47 is heated at a position just ahead of a position at which the material is discharged on the fabricating table 12. FIG. 14B is a top view of a fabrication layer that is being fabricated.

The example illustrated in FIG. 14B depicts how the heating range 61 is set for one discharge line 60. In the example of FIG. 14B, the discharge line 60 forming an upper layer 46 is being formed on the lower layer 47 formed by about three discharge lines. The heating range 61 is at a position ahead of the current discharge position in the direction in which the discharge nozzle 34 advances. Here, the heating range 61 is represented by a circle, and the diameter of the circle that defines the range according to the calculated amount of heat is substantially equal to the discharge width of the material. The shape of the heating range 61 is not limited to a circle but may be another shape.

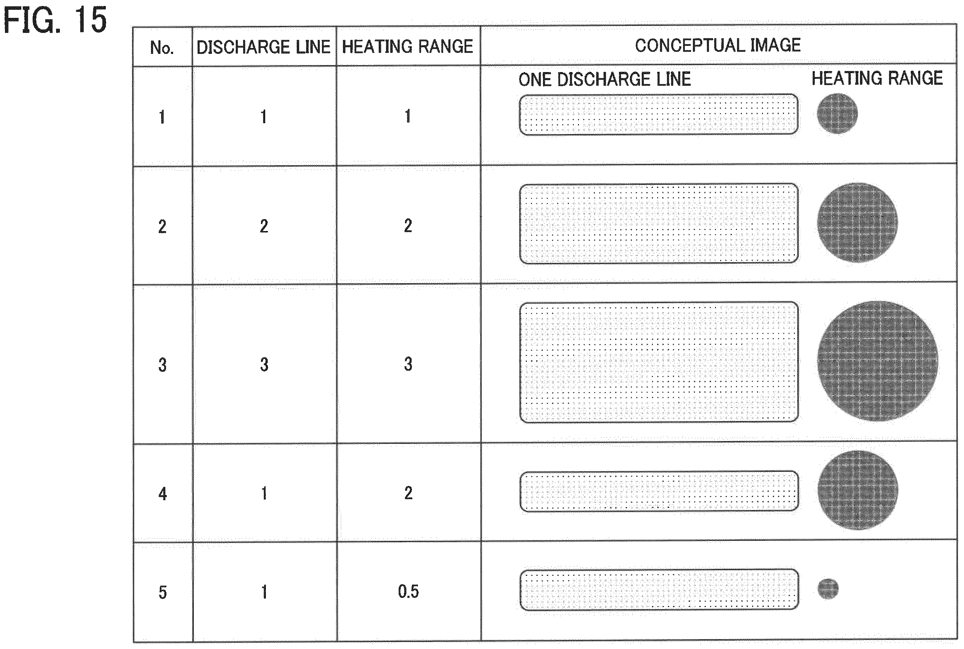

FIG. 15 is a diagram illustrating an example of changing the heating range. The heating range 61 is changed in accordance with the calculated amount of heat. If the shape is circular, the heating range 61 can be represented by the ratio of the diameter to the discharge line (discharge width). If the discharge line is defined as 1 with a given width as a reference and the diameter of the heating range is the same as the discharge line, the heating range is 1. If the discharge line is 2, that is, has a width twice as wide as the reference and the diameter of the heating range is 2, that is, the same as the diameter of the discharge line, the heating range is 2.

Example 1 illustrated in FIG. 15 depicts an example in which the discharge line of 1 is heated in the heating range of 1. Example 2 depicts an example in which the discharge line of 2 is heated in the heating range of 2. Example 3 depicts an example in which the discharge line of 3 is heated in the heating range of 3. Examples 2 and 3 are examples in which the heating ranges are set to two and three, respectively, according to the amount of heat calculated in consideration of the discharge width.

Example 4 depicts an example in which the discharge line 1 is heated in the heating range of 2. For example, since the type and color of the material of the lower layer 47 to be heated are different from the type and color of the discharge line of 1, the calculated amount of heat of Example 4 is relatively larger than the calculated amount of heat of Example 1, and as a result, the heating range is set to 2. In the above-described examples, the amount of heat changes depending on the type and color of the material. However, embodiments of the present disclosure are not limited to such a configuration.

Example 5 depicts an example in which the discharge line of 1 is heated in a heating range of 0.5. If the discharge position is not at the center of the layer being formed but at the end, heat diffuses faster in the center and slowly at the end because heat diffuses faster in the solid. Therefore, the amount of heat is calculated to be smaller than when the discharge line is formed at the center. Example 5 is an example in which the amount of heat is smaller than the amount of heat of Example 1 and, as a result, the heating range is set to 0.5. Here, the example has been described in which the amount of heat changes depending on the fabricating position. However, embodiments of the present disclosure are not limited to the example. Note that the ratios of FIG. 15 ratios are merely examples and may be changed to any ratio such as a heating range of 0.7 for the discharge line of 1.

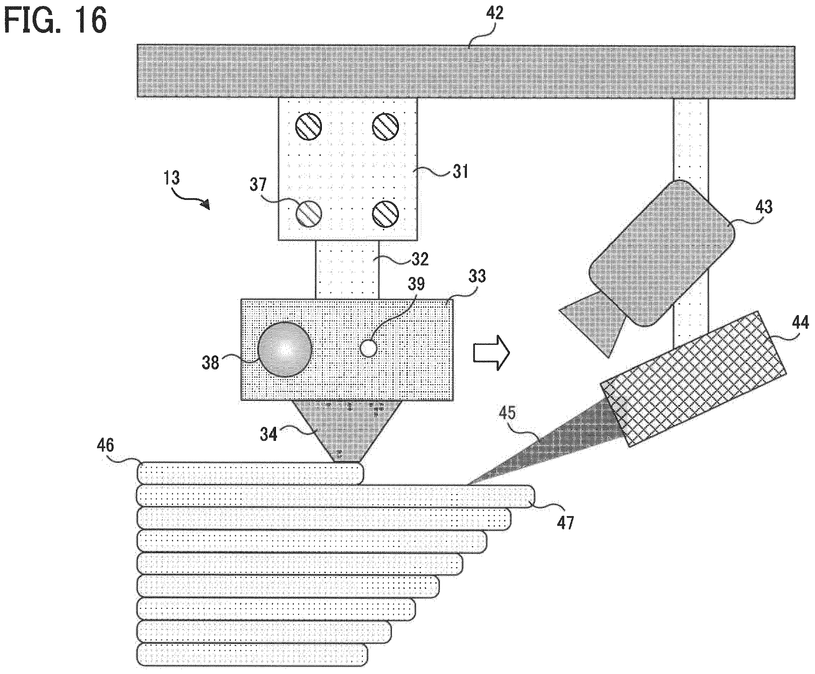

FIG. 16 is a diagram illustrating an example in which the amount of heat is calculated using the information on the fabrication shape, the heating range is determined from the calculated amount of heat, and the heating range is changed to the determined heating range. The fabrication shape illustrated in FIG. 16 has a shape in which the area of the fabrication material layer increases toward the upper side and is tapered in a direction of operation of the discharge module 13. In such a shape, since there is no lower layer below a leading end of each layer in the direction of operation of the discharge module 13. Accordingly, if the heating range 61 is equal to or larger than the discharge width, the leading end would be entirely melted and the outer shape would deform.

Hence, in a portion below which a lower layer exists, the discharge line of 1 is heated in the heating range of 1 as in Example 1 illustrated in FIG. 15. On the other hand, regarding a leading end portion close to the outer shape, below which there is no lower layer, the heating range is changed so that only a center portion is melted except for an edge portion constituting the outline of the leading end portion. As in Example 5 illustrated in FIG. 15, the discharge line of 1 is heated in a heating range of 0.5. The heating ranges illustrated here are merely examples, and the heating range may be 0.4, 0.6, or the like as long as only the center portion except the edge portion can be melted. As described above, performing the calculation using the information on the fabrication shape allows the heating range to be changed according to the fabrication shape.

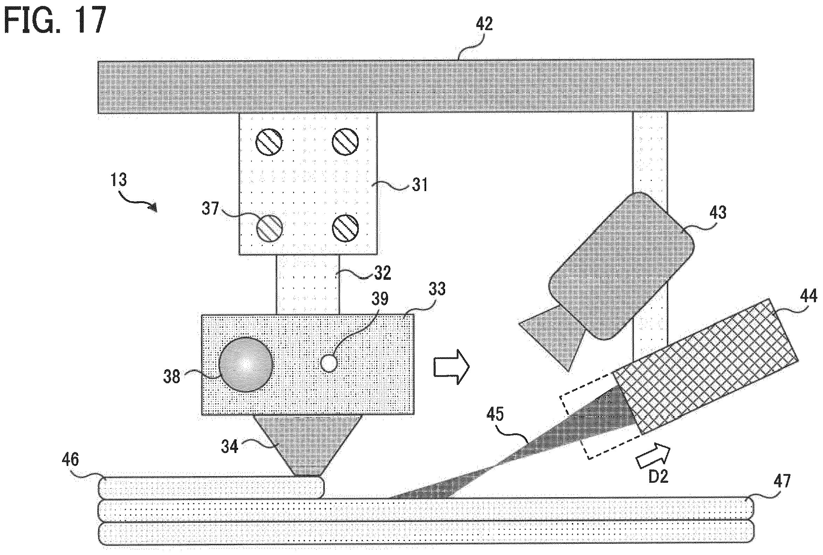

FIG. 17 is a diagram illustrating an example in which the heating range is changed by movement of a lens group. In FIG. 17, means for changing the position of the lens group mounted in the laser source 44 as a heating device is employed as means for changing the heating range. In the present example, the heating device is described as the laser source 44 instead of the heating module 23 illustrated in FIG. 1 but is not limited to the laser source 44.

The heating range of heating using a laser can be changed by moving the laser source 44 back and forth, with reference to the optical axis direction, from the focal point of the optical system that condenses the laser light. In the example illustrated in FIG. 17, the heating range is changed by moving the lens group of the laser optical system of the laser source 44 in a direction away from a focal position, which is indicated by arrow D2 in FIG. 17. As the distance from the focal position increases, the focal point of the lens group moves away from the lower layer 47 and the size of the circular heating range illustrated in FIG. 15 increases.

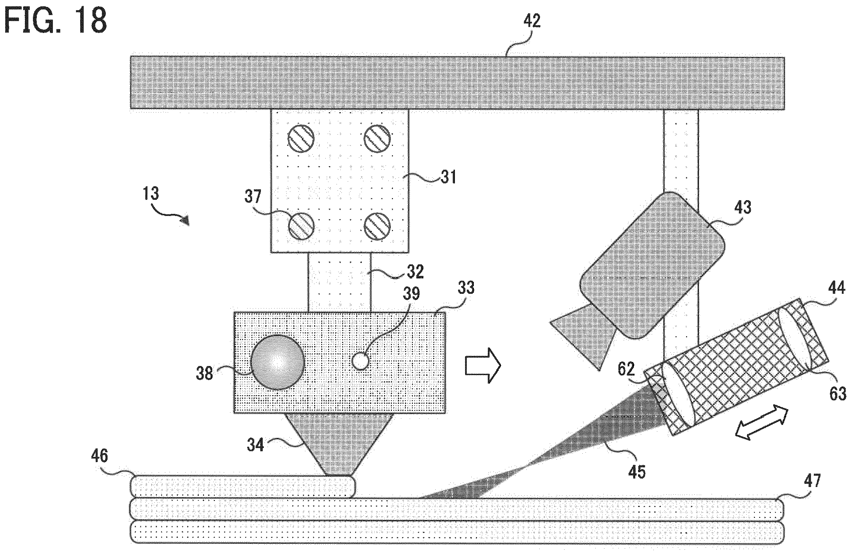

FIG. 18 is a diagram illustrating an example in which the heating range is changed by changing the distance (interval) between lenses. In FIG. 18, means for changing the distance between the lenses mounted in the laser source 44 as the heating device is used as means for changing the heating range. Also in the present example, the heating device is described as the laser source 44 instead of the heating module 23 but is not limited to the laser source 44.

The heating range of heating using a laser can be changed by moving the laser source 44 back and forth, with reference to the optical axis direction, from the focal point of the optical system that condenses the laser light. In the example illustrated in FIG. 18, the heating range is changed by moving lenses 62 and 63 in the lens group of the laser optical system of the laser source 44 and intentionally changing the lenses 62 and 63 in a direction away from the focal position.

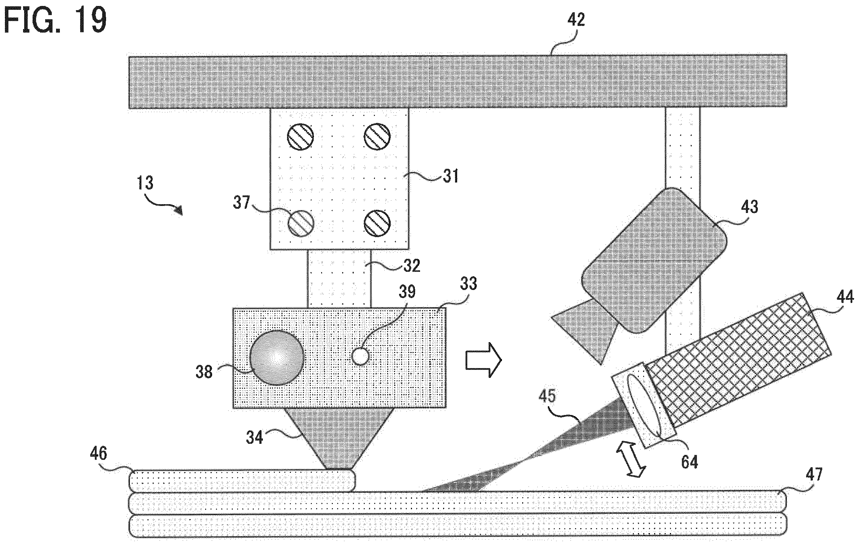

FIG. 19 is a diagram illustrating an example in which the heating range is changed by moving an additional lens. In FIG. 19, an additional lens 64 is added to the lens group mounted in the laser source 44 as the heating device. Means for moving the additional lens 64 is employed as means for changing the heating range. Also in the present example, the heating device is described as the laser source 44 instead of the heating module 23 but is not limited to the laser source 44.

The heating range of heating using a laser can be changed by moving the laser source 44 back and forth, with reference to the optical axis direction, from the focal point of the optical system that condenses the laser light. In the example illustrated in FIG. 19, the heating range is changed by moving the additional lens 64 in a direction perpendicular to the optical axis direction and intentionally changing the additional lens 64 in a direction away from the focal position.

In the example illustrated in FIG. 19, the example in which the additional lens 64 is newly added has been described. However, embodiments of the present disclosure are not limited to the example of FIG. 19. For example, the heating range may be changed by moving one of a plurality of lenses constituting the already mounted lens group and removing the one of the plurality of lenses.

In the above-described example, the laser source 44 is used as the heating device instead of the heating module 23. Below, an example is described in which a device other than the laser source 44 is used as the heating device to change the heating range.

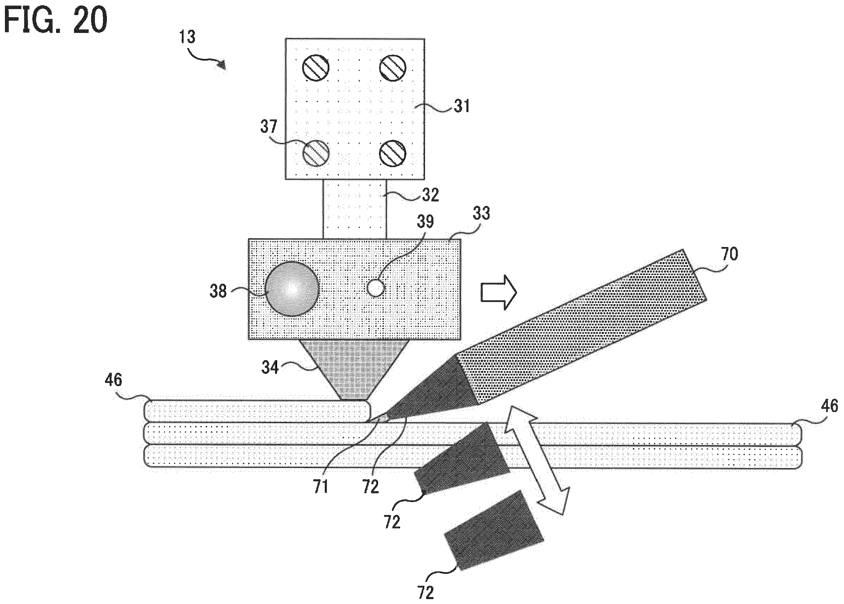

FIG. 20 is a diagram illustrating an example in which a hot air source 70 is used instead of the heating module 23 as the heating device and the heating range is changed. The hot air source 70 is a device that generates hot air and may include, for example, an intake port of air and a heater that heats the intake air. The hot air source 70 blows out hot air 71 toward a position of the lower layer 47 just ahead of the position to which a material is discharged from the discharge nozzle 34, to heat the material.

In FIG. 20, as means for changing the heating range, a plurality of hot air nozzles 72 are interchangeably attached to the tip of the hot air source 70. For example, three hot air nozzles 72 are prepared so that the size of an outlet port can be changed in three levels. For example, a nozzle with the smallest outlet port, a nozzle with the largest outlet port, and a nozzle with an outlet port having a size between the smallest and largest outlet ports may be labeled as small, large, and middle, respectively. The number of hot air nozzles 72 is not limited to three but may be two, or four or more.

In the example illustrated in FIG. 20, the heating range can be increased by changing the hot air nozzle 72 from small to middle or middle to large and can be decreased by changing the hot air nozzle 72 from large to middle or middle to small. In addition, three hot air sources 70 including large, middle, and small hot air nozzles 72 may be attached to the rotary stage 42 illustrated in FIG. 7. Thus, any of the hot air sources 70 to be used can be selected and switched for use according to the heating range determined by the determination unit 51.

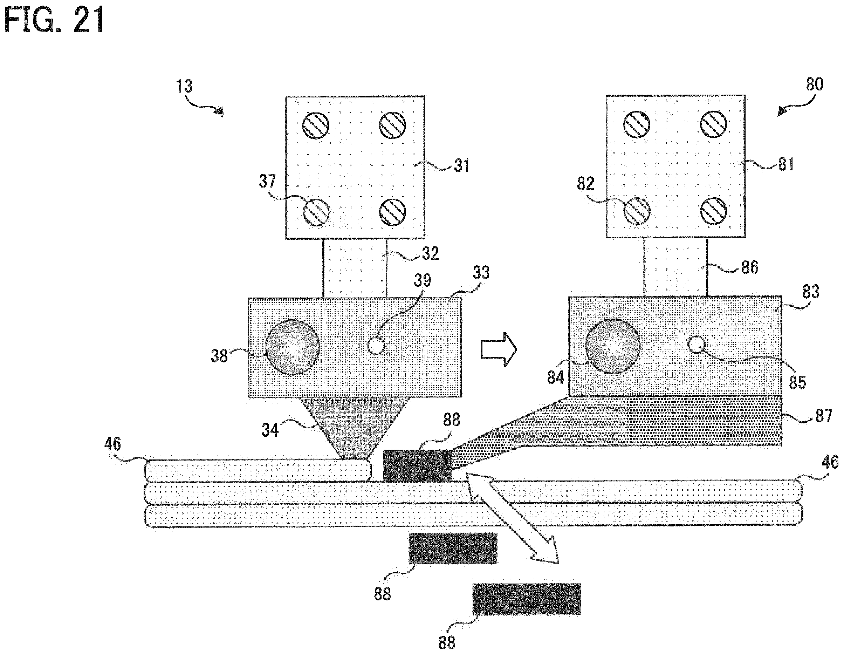

FIG. 21 is a diagram illustrating an example in which the heating range is changed using a contact-type heating device, for example, an iron 80 instead of the heating module 23. Similarly with the discharge module 13, the iron 80 includes a cooling block 81, a cooling source 82, a heating block 83, a heat source 84, a thermocouple 85, and a guide 86. The guide 86 connects the cooling block 81 and the heating block 83 and has a heat insulating property for restraining heat of the heating block 83 to be propagated to the upper side. The iron 80 includes a heating plate 87 attached to the lower surface of the heating block 83 and a heating range changing plate 88 as a plate-fabrication object that is attached to a projecting end of the heating plate 87 so as to be exchangeable.

The iron 80 transfers the heat generated by the heat source 84 from the heating block 83 to the heating range changing plate 88 via the heating plate 87. The heating range changing plate 88 contacts the lower layer 47 at a position just ahead of the position to which the material is discharged from the discharge nozzle 34 and applies the transferred heat to the lower layer 47 to heat a contact surface as the heating range.

In FIG. 21, a plurality of heating range changing plates 88 is employed as means for changing the heating range. As with the hot air nozzle 72 illustrated in FIG. 21, three heating range changing plates 88 are prepared so as to be changed in, for example, three levels according to the contact area. For example, a plate with the smallest contact area, a plate with the largest contact area, and a nozzle with a contact area between the smallest contact area and the largest contact area may be labeled as small, large, and middle, respectively. The number of heating range changing plates 88 is not limited to three but may be two, or four or more.

In the example illustrated in FIG. 21, the heating range can be increased by changing the heating range changing plate 88 from small to middle or middle to large and can be decreased by changing the heating range changing plate 88 from large to middle or middle to small. In such a case also, three irons 80 including large, middle, and small heating range changing plates 88 may be attached to the rotary stage 42 illustrated in FIG. 7. Thus, any of the irons 80 to be used can be selected and switched for use according to the heating range determined by the determination unit 51.

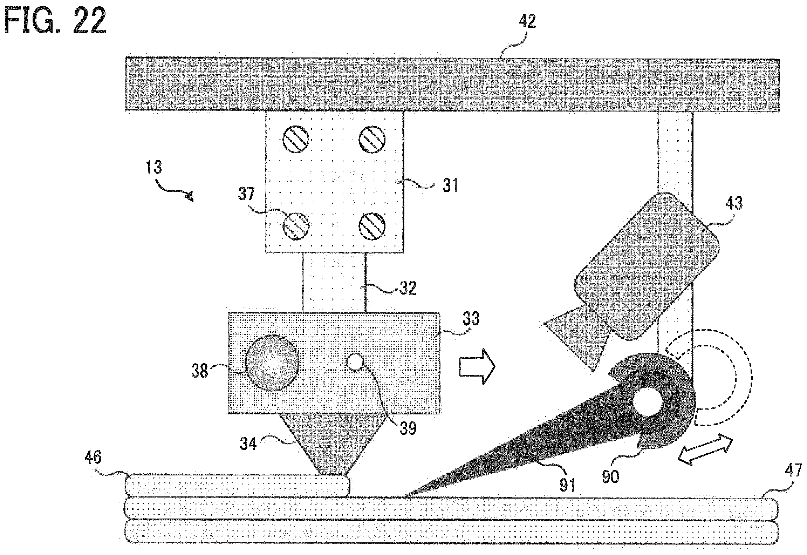

FIG. 22 is a diagram illustrating an example in which a halogen lamp 90 is used as the heating device instead of the heating module 23 to change the heating range. The halogen lamp 90 is an infrared lamp, in which a halogen gas is sealed in a glass bulb, to generate infrared rays. Infrared rays are electromagnetic waves that have an effect of giving heat to an object and have longer wavelengths than visible light. The halogen lamp 90 has a cover covering the periphery other than the front side and emits the generated infrared rays 91 from an opening at the front side. The inner surface of the cover is covered with a member that reflects infrared rays so that the infrared rays are appropriately emitted from the opening.

The halogen lamp 90 is mounted above the fabricating table 12 similarly with the laser source 44 and emits infrared rays 91 obliquely downward toward the lower layer 47 at a position just ahead of a position to which the material is discharged from the discharge nozzle 34, to heat the lower layer 47.

In FIG. 22, the means for changing the heating range is means for moving the halogen lamp 90 and the heating range is changed by moving the position of the halogen lamp 90 obliquely upward.

Here, the heating range is changed by moving the halogen lamp 90. However, embodiments of the present disclosure are not limited to such a configuration. For example, the heating range may be changed by changing the size of the opening of the cover that covers the halogen lamp 90. In such a case, similarly to the above-described hot air nozzles 72 and the heating range changing plates 88, three covers may be prepared and changed at three levels, or two or four or more covers may be prepared and changed at two or four or more levels.

As described above, the heating range is changed, the changed heating range is heated by the halogen lamp 90 as the heating device, the material is discharged from the discharge module 13 to the heated lower layer 47, and the fabrication material layer is laminated. The process is repeated to form a fabrication object. Since the heating range can be changed depending on the fabrication shape and fabricating position, etc., the occurrence of deterioration or deformation of the material can be restrained. In addition, the lower layer is melted or semi-molten, and the material is discharged and laminated on the lower layer, thus allowing the adhesiveness between the layers to be enhanced.

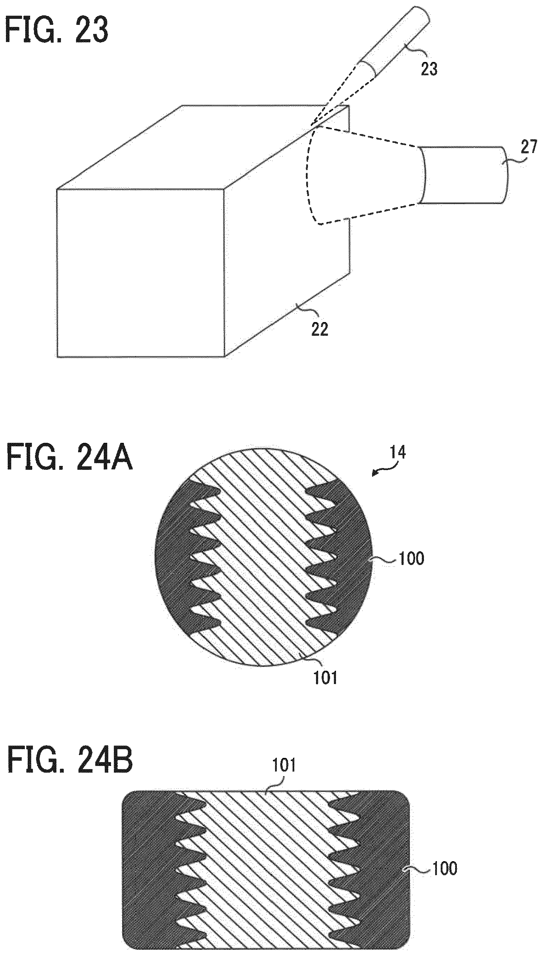

Changing the heating range can restrain the occurrence of deformation. In particular, in order to more effectively restrain the deformation of the outer shape and enhance the fabricating accuracy, as illustrated in FIG. 23, the heating range may be heated by the heating module 23 while the side cooler 27 cools a side surface of the fabrication object 22, that is, a surface of the fabrication object 22 parallel to the Z-axis.

Further, in order to more effectively restrain the deformation of the outer shape and enhance the fabricating accuracy, as illustrated in FIGS. 24A and 24B, the fabrication may be performed using the filament 14 in which constituent materials are unevenly distributed. FIGS. 24A and 24B are cross-sectional views illustrating an example of the filament 14 in which constituent materials are unevenly distributed.

In the example illustrated in FIG. 24A, a high-viscosity resin 100 is disposed on both sides of the filament 14 and a low-viscosity resin 101 is disposed at the center of the filament 14. The high-viscosity resin 100 is not particularly limited. Examples of the high-viscosity resin 100 include a resin that is made highly viscous by blending a filler such as alumina, carbon black, carbon fiber, or glass fiber. When the filler impairs a desired function, a resin whose molecular weight is controlled may be used as the high-viscosity resin 100. The low-viscosity resin 101 is not particularly limited but includes a resin of a low molecular weight.

FIG. 24B is a cross-sectional view of a discharged object of the filament 14 illustrated in FIG. 24A. Since the high-viscosity resin 100 surrounds the periphery of the low-viscosity resin 101, a fabrication object is less likely to deform.

The low-viscosity resin 101 generally has a low melting point, and the high-viscosity resin 100 has a high melting point. In such a configuration, the high-viscosity resin 100 is disposed only at the periphery of the discharged object and not disposed at the upper side and the lower side of the discharged object in the Z-axis direction. Therefore, a lower layer is heated to the extent that the low-viscosity resin 101 is melted and the filament 14 is discharged onto the lower layer. Thus, the fabrication object can be fabricated without deformation of the outer shape.

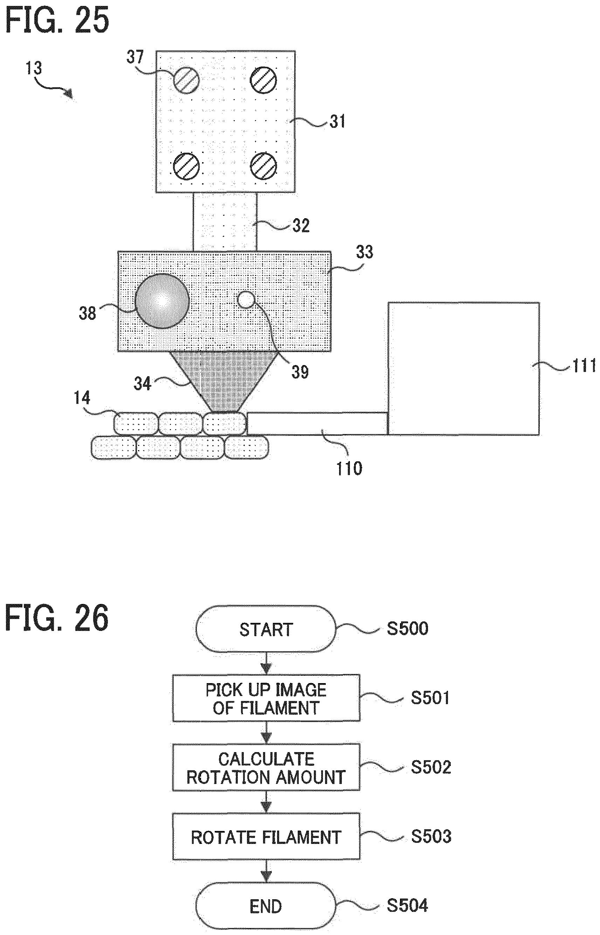

When the outer peripheral portion is heated to enhance the adhesion in the lamination direction of the outer peripheral portion, for example, a plate may be directly contacted with a fabrication object from a lateral side of the fabrication object. Thus, the fabrication object can be heated while preventing deformation of the outer shape. FIG. 25 is a diagram illustrating an example of the configuration of a fabricating apparatus including a regulating device such as a plate that restricts the horizontal movement of resin due to a decrease in viscosity caused by heating. The fabricating apparatus includes an assist mechanism 111 as a regulating device having a thin plate 110 to regulate the movement of the resin.

The plate 110 has a thickness corresponding to the thickness of the layer to be formed and has a thickness of, for example, 0.1 mm to 0.3 mm. The assist mechanism 111 is fixed to the discharge module 13 or a bracket indirectly fixed to the discharge module 13.

The plate 110 may be at room temperature but is desirably heated to a temperature higher than room temperature. This is because, when the material is a crystalline resin and the plate 110 at room temperature comes into contact with the material, the material is rapidly cooled. Accordingly, an amorphous state of the material without a crystal structure proceeds and a desired strength cannot be obtained.

The process of regulating the direction of the filament 14 using the regulating device illustrated in FIG. 25 is briefly described with reference to FIG. 26. In the process, the imaging module 35 and the torsional rotation mechanism 36 are used.

The process starts from step S500. In step S501, the imaging module 35 captures the filament 14 introduced into the discharge module 13. The captured image data is sent to the controller 26. In step S502, the controller 26 receives and analyzes the image data and calculates the amount of rotation. As a method of calculating the amount of rotation, for example, a case where a direction in which a boundary line defining a boundary between the high-viscosity resin 100 and the low-viscosity resin 101 in the filament 14 extends is a predetermined direction is set as a reference (0°). In the method, the amount of rotation is determined by calculating how much the boundary line is inclined with respect to the reference. Since the above-described method is one example, other methods known so far may be employed.

The controller 26 generates a signal for rotating the filament 14 based on the calculated amount of rotation and transmits the signal to the torsional rotation mechanism 36.

In step S503, the torsional rotation mechanism 36 receives the signal transmitted from the controller 26, rotates the filament 14 based on the signal, and regulates the direction of the filament 14. When the direction of the filament 14 has been regulated, the process proceeds to step S504 and ends.

Here, a description is given of a test result of the adhesiveness of each layer obtained by measuring the maximum tensile strength of the fabrication object 22 fabricated by the fabricating apparatus 10. The test was performed for two cases of Examples 1 and 2 and two cases of Comparative Examples 1 and 2 for comparison. In measuring the maximum tensile strength of the fabrication object, an autograph AGS-5kNX (manufactured by Shimadzu Corporation) was used.

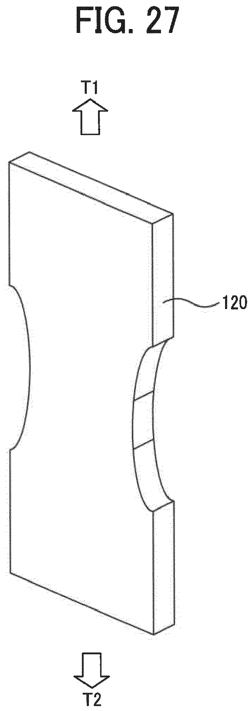

FIG. 27 is a diagram illustrating the shape of the fabrication object 22 fabricated in Examples 1 and 2 and Comparative Examples 1 and 2. The fabrication object 22 complies with ASTM D638-02a Type-V The fabricating apparatus 10 discharged a fabrication material to the fabricating table 12 to form a fabrication material layer and repeated the fabrication to laminate fabrication material layers. Thus, a tensile test piece 120 was formed in which layers were laminated in a longitudinal direction. Then, on the autograph, a lower portion and an upper portion of the laminated layers of the fabricated tensile test piece 120 were grasped and pulled at a speed of 200 mm / min in an upper direction T1 and a lower direction T2. Thus, the maximum tensile strength of the fabrication object was measured.

In Comparative Example 1, the fabrication material layers were laminated without heating the lower layer 47 by the heating module 23, and the tensile test piece 120 was formed. A resin that is melted by heat was used as the filament 14 that is the fabrication material. Paired stainless-steel roller having a diameter of 12 mm were used for an introduction portion of the discharge module 13. The dimensional shape of the transfer path of the discharge module 13 was a rod shape having a circular cross-section. The discharge nozzle 34 at the tip of the discharge module 13 was made of brass and the opening diameter of the tip of the discharge nozzle 34 was 0.5 mm. A portion forming the transfer path was a hollow having a diameter of 2.5 mm.

The cooling block 31 was made of stainless steel. A water-cooled tube serving as the cooling source 37 passed through the cooling block 31 and was connected to a chiller. The chiller is a device that controls the temperature of water and circulates water. The temperature of the water controlled by the chiller was 10°C. The heating block 33 was also made of stainless steel, passed through a cartridge heater serving as the heat source 38, and the thermocouple 39 was arranged on the side symmetrical to the filament 14 to control the temperature. The set temperature of the cartridge heater was set to be equal to or higher than the melting temperature of the resin. The moving speed of the discharge nozzle 34 during fabrication was set to 10 mm / sec and a tensile test piece 120 as illustrated in FIG. 27 was fabricated.

The fabricating table 12 was set to a temperature range in which the fabrication material can be adhered on the fabricating table 12, and was controlled to the temperature range by the heating unit 41. The thickness of one layer in the Z-axis direction, which is the resolution in the lamination direction of the fabrication object 22, was 0.25 mm.

In Comparative Example 2, the same conditions as the conditions in Comparative Example 1 were used, and only the moving speed of the discharge nozzle 34 during fabrication was changed to 50 mm / sec.

In Example 1, the same conditions as the conditions in Comparative Example 1 were used. When the fabrication material was discharged from the discharge nozzle 34, the lower layer 47 at a position just ahead of a position to which the material was discharged was heated by the heating module 23 and the tensile test piece 120 as illustrated in FIG. 27 was fabricated. After the lower layer 47 has cooled, the heat transfer calculation unit 50 calculated the amount of heat necessary for heating the lower layer 47 and the determination unit 51 determines the heating range 61 based on the calculated amount of heat. The determined heating range 61 was heated by the heating module 23. The heating range 61 was heated to a temperature higher than the glass transition point of the filament 14.

In Example 2, the same conditions as the conditions in Comparative Example 2 were used. When the fabrication material was discharged from the discharge nozzle 34, the lower layer 47 at a position just ahead of a position to which the material was discharged was heated by the heating module 23 and the tensile test piece 120 as illustrated in FIG. 27 was fabricated. After the lower layer 47 has cooled, the heat transfer calculation unit 50 calculated the amount of heat necessary for heating the lower layer 47 and the determination unit 51 determines the heating range 61 based on the calculated amount of heat. The determined heating range 61 was heated by the heating module 23. The heating range 61 was heated to a temperature higher than the glass transition point of the filament 14.

In each of Examples 1 and 2, a maximum tensile strength greater than a maximum tensile strength of each of Comparative Examples 1 and 2 was obtained. In addition, the occurrence of deterioration (burn) and deformation of the material was restrained.

As described above, the fabricating apparatus 10 having the above-described configuration can increase the strength of the fabrication object 22 in the lamination direction, that is, enhance the adhesiveness, and restrain the occurrence of deterioration (burn) or deformation of the fabrication material.

So far, the configuration is described in which the laser source 44 is attached to the rotary stage 42 that rotates in a certain direction about the discharge nozzle (also simply referred to as nozzle) 34 so that even if the direction of movement of the nozzle changes, the laser source 44 can precede the discharge position of the nozzle and emit laser light (also simply referred to as laser) to the lower layer 47. However, in such a configuration, when the nozzle speed changes (in particular, decreases), the time from when the lower layer 47 is heated to when the fabrication material is discharged on the lower layer 47 may exceed a scheduled time, thus causing the temperature of the lower layer 47 to drop from the target temperature. In such a case, it is necessary to change the output of the laser according to the nozzle speed. However, since the laser source precedes the discharge position to emit the laser, the nozzle speed may not be largely changed.

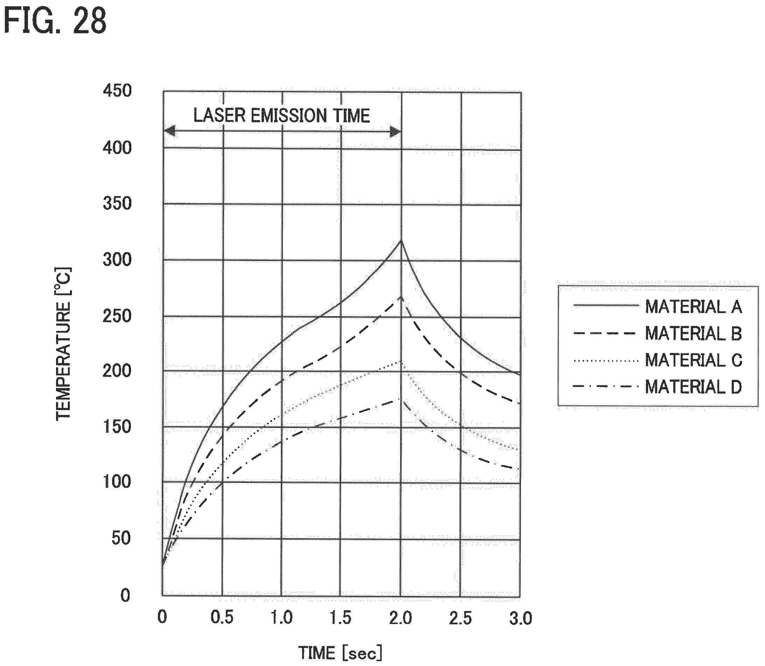

Here, with reference to FIG. 28, a description is given of a temperature change of each fabrication material (resin) with laser emission. FIG. 28 is a graph illustrating the relationship between the surface temperature (°C) and the time (seconds) of a laser-emitted portion when laser is emitted to the surfaces of a plurality of types of materials. The laser is emitted for only 2 seconds and then the emission of the laser stops. The ambient temperature at this time is room temperature (about 25°C).

Referring to FIG. 28, the surface temperature rises when the laser is emitted. When the laser emission is stopped, the fabrication material is cooled down with time and the temperature decreases.

The upper limit temperature in heating the material by the laser emission is determined as a temperature at which the material to be heated does not deteriorate or falls within an acceptable range. On the other hand, the lower limit temperature is determined as a temperature at which a desired strength is generated in the fabrication object. It is desirable that the emission range of the laser be a range in which the shape of the fabrication object can be maintained.

FIG. 28 represents measurement results of four materials. Material A is a resin called a super engineering plastic whose discharge temperature exceeds 300°C. The resin discharged at such a high temperature also has a high cooling rate after the laser is emitted. In order to maintain the resin at the target temperature, the resin is discharged immediately after the laser is emitted to the resin and the distance between the nozzle and the laser is approached to, for example, several millimeters.

When such a material is used, for example, a method may be used in which a chamber is used to raise the ambient temperature and relatively lower the heating temperature of the laser. However, if the ambient environment is entirely warmed using a chamber in the case of a resin such as material A, the shape of the fabrication object may not be maintained when the high-viscosity resin from the nozzle is compressed and pressed against the lower layer for fabrication. Also, there is an upper limit to the ambient temperature, and the above-described method alone cannot enhance the lamination strength while maintaining the shape of the fabrication object.

In order to deal with such a disadvantage, the laser source 44 is mounted on the carriage together with the drive source that drives the laser source 44. The carriage is a moving device to move the discharge module 13 three-dimensionally, and includes, for example, the X-axis drive shaft 16, the X-axis drive motor 17, the Y-axis drive motor 18, the Z-axis drive shaft 19, and the Z-axis drive motor 20 illustrated in FIG. 1.

In such a configuration in which the laser source 44 is mounted on the carriage together with the drive source, the laser source 44 moves together with the nozzle, thus allowing the laser to be accurately aimed and emitted to a position right next to the nozzle that is largely moving. Such a configuration can deal with the disadvantage in the configuration (separate drive) of moving the laser source 44 separately from the nozzle that the stacking tolerance becomes large and causes an interference due to multiple driving or a collision due to control error.

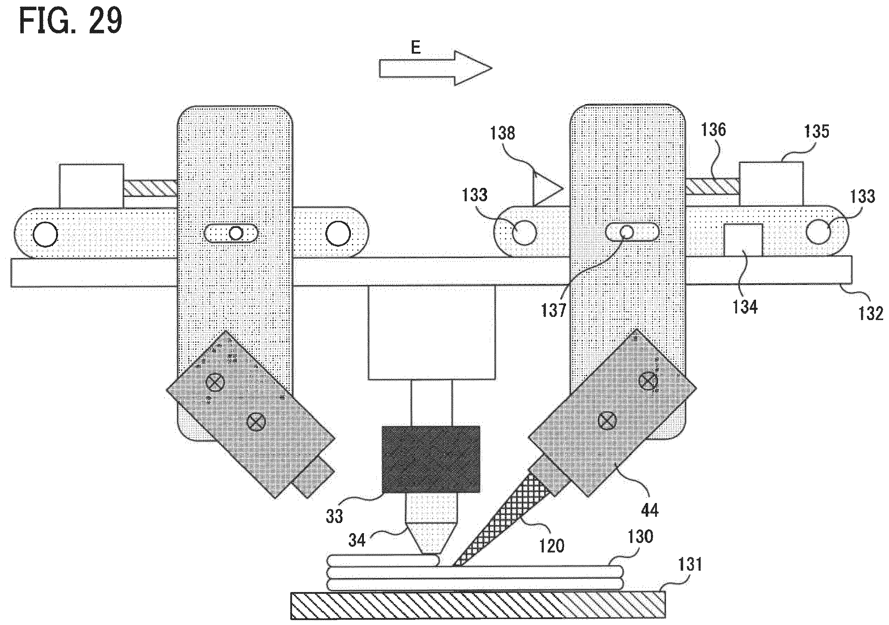

An example configuration is described with reference to FIG. 29. FIG. 29 is a diagram illustrating a state in which materials are laminated on a build plate 131 that is a base on which the fabrication object 130 is laminated. FIG. 29 depicts that the discharge nozzle 34 is moving in a direction illustrated by arrow E while a laser is emitted onto the third layer after two layers of the material are laminated.

In the example illustrated in FIG. 29, two laser sources 44 on the left side and the right side are mounted on the carriage 132 together with a drive source as a moving device that moves the laser sources 44. The drive source includes an X drive unit that drives in the X-axis direction and a Y drive unit that drives in the Y-axis direction. As a result, the laser source 44 moves two-dimensionally in the carriage 132.

The X drive unit includes a laser X-axis drive motor, a laser X-axis lead screw, a laser X-axis drive shaft 133, and a laser X-axis home position (HP) sensor 134 and moves the laser sources 44 mounted on a carriage 132 in the X-axis direction with respect to the carriage 132. The laser X-axis drive motor rotates the laser X-axis lead screw. The laser X-axis lead screw converts a rotary motion into a linear motion and moves the laser X-axis drive shaft 133 in the X direction. The laser X-axis HP sensor 134 detects the current position of the laser X-axis drive shaft 133 with respect to the initial position. That is, the laser X-axis HP sensor 134 detects how much the laser X-axis drive shaft 133 has moved in the X-axis direction.

The Y drive unit is mounted on the carriage 132, similar to the X drive unit, and includes a laser Y-axis drive motor 135, a laser Y-axis lead screw 136, a laser Y-axis drive shaft 137, and a laser Y-axis HP sensor 138. The Y drive unit moves the laser source 44 mounted on the carriage 132 in the Y-axis direction with respect to the carriage 132. The laser Y-axis drive motor 135 and the like are similar to the laser X-axis drive motor and the like, except for the moving direction.

In the example illustrated in FIG. 29, the laser source 44 is two-dimensionally moved in the carriage 132 by combining two linear drive units, that is, the X drive unit and the Y drive unit. However, embodiments of the present disclosure are not limited to such a configuration. As long as the laser source 44 can be moved two-dimensionally in the carriage 132, for example, a rotary drive or a delta drive may be combined in addition to the linear drive. Delta drive is a method of controlling the movement of a plurality of links, which is connected in parallel, in parallel.

The discharge nozzle 34, the laser X-axis HP sensor 134, and the laser Y-axis HP sensor 138 are desirably positioned based on the position of a reference component in the carriage 132 to precisely configure the relative positional relationship between the nozzle and the laser source 44. Since the reference component is a component that serves as a reference for horizontal movement, the Z-axis drive shaft 19 or the like that does not move in the horizontal direction can be used. Alternatively, a method may be used of measuring the laser emission position and the nozzle position or positioning the position with a jig or the like, and giving a correction value. The correction value can be obtained before shipment at the factory, can be obtained when a serviceman performs maintenance on site, or can be obtained by the user. The positions may be adjustable by the user.

The nozzle needs a movement width larger than the width of the fabrication object in order to fabricate the fabrication object. Typically, the nozzle is designed to be able to move 500 mm square. Moving over such a wide range may lower the positioning accuracy and cause vibration.

For example, an extra margin for the vibration of the nozzle and the laser is provided to emit the laser vibrating by another drive to the vicinity of the nozzle while following the vibrating nozzle.

However, in the configuration in which the laser source 44 and the drive source are mounted on the same carriage 132 as described above, the movement of the laser within the carriage 132 may be about several mm, thus allowing the laser vibration to be greatly restrained. In addition, since the nozzle also vibrates in the same manner as the laser, the same result is obtained as when none of the nozzle and the laser vibrates. Accordingly, the laser can be emitted to the vicinity of the nozzle without considering the vibration of the nozzle.

In the case of the separate drive, the drive source is disposed outside the carriage 132 and follows the vicinity of the nozzle that largely moves while changing the angle within the range of 360°, so that it is difficult to avoid interference between the nozzle and the drive source. To avoid the interference, a complicated and large-scale configuration would be used. On the other hand, when the laser source 44 and the drive source are disposed on the same carriage 132, the drive source can be easily assembled without such interference and the size can be reduced.

When only one laser source 44 is used, it is necessary to go around the nozzle depending on the emission angle in order to emit a laser to the vicinity of the nozzle, thus increasing the movement range. Further, in order to avoid interference with the extruder 30 and the nozzle, the apparatus becomes complicated. In order to reduce the moving range of the laser source 44, the XY plane can be moved without changing the attitude of the laser source 44. However, in such a case, the laser source 44 cannot go around to the opposite side of the nozzle. To go around the opposite side, the projection angle of the laser source 44 on the XY plane needs to be changed. If only one laser source 44 is used, the above-described disadvantage occurs. In the example illustrated in FIG. 29, two laser sources 44 are provided with one on the left side and the other on the right side to avoid the disadvantage. The number of laser sources 44 is not limited to two but may be three or more.

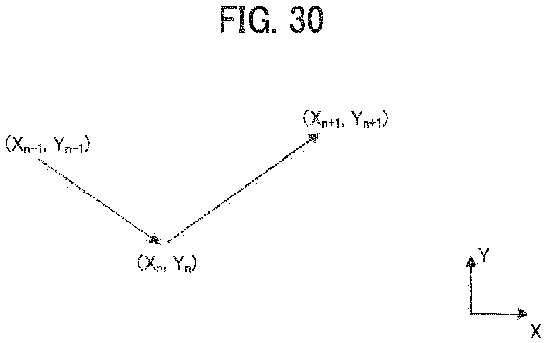

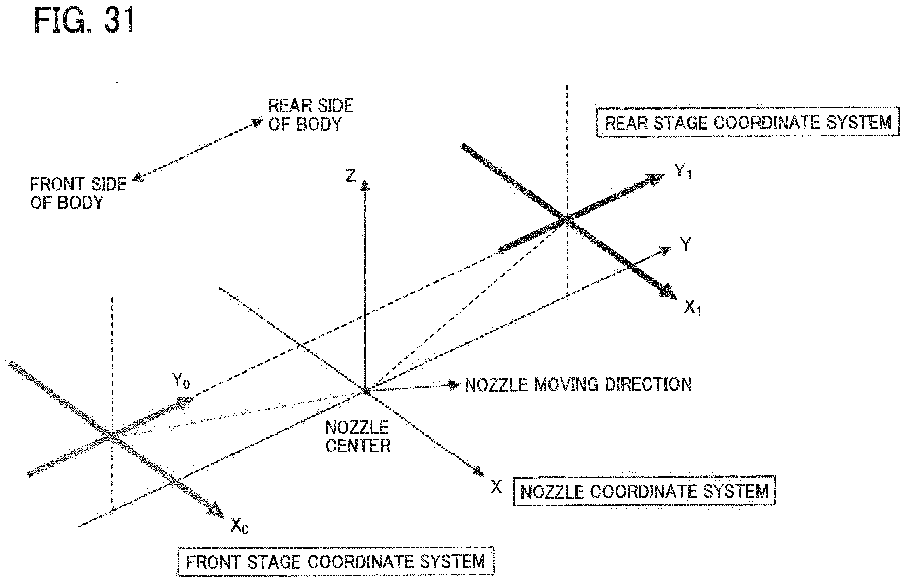

However, in the configuration in which the plurality of laser sources 44 is provided in such a manner, the laser sources 44 mounted on the carriage 132, while moving with the nozzle as a single unit, emits a laser to a desired position near the nozzle in accordance with the moving direction and the speed of the nozzle that change one after another during fabrication. In addition, a method of switching the plurality of laser sources 44 is needed, thus complicating the control. A control method for dealing with the complication is described in detail with reference to FIGS. 30 and 31.

FIG. 30 is a diagram in which the movement of the nozzle is cut out at three points in the XY coordinate system. The discharge of the material from the nozzle is performed before the surface temperature of the material heated by the laser emission becomes equal to or lower than the target temperature. Therefore, the movement in any two-dimensional direction may be performed before the temperature becomes equal to or lower than the target temperature. In FIG. 30, the target coordinates of the (n - 1)th, nth, and (n + 1)th nozzles during fabricating are $(X_{n-1}, Y_{n-1})$, $(X_n, Y_n)$, and $(X_{n+1}, Y_{n+1})$. The nozzle moves along two straight lines formed by the three points.

FIG. 31 is a diagram illustrating a position at which a laser is emitted with respect to the center of the nozzle. The two laser sources 44 are arranged so as to sandwich the nozzle, and the centers of the laser sources 44 are the intersection between the $X_0$ axis and the $Y_0$ axis and the intersection between the $X_1$ axis and the Y1 axis, respectively. The coordinate system represented by the XY plane is a nozzle (carriage) coordinate system indicating the position of the nozzle (carriage). The coordinate system represented by the $X_0Y_0$ plane and the $X_1Y_1$ plane is a front state coordinate system and a rear stage coordinate system indicating the positions of the laser sources 44.

Here, the laser coordinates are defined with the center of the discharge nozzle 34 as the origin. The position of the laser is the center of the emission position of the laser with respect to the XY plane. Therefore, the origin of the laser coordinates changes with the movement of the discharge nozzle 34. In any of the coordinate systems (front and rear stage coordinate systems) of the two laser sources 44, the center of the discharge nozzle 34 is the same at the origin.

Hereinafter, a specific method of control preceding the nozzle for a certain time is described. Here, an example is described in which an XY coordinate, which is most common in 3D printers of the fused filament fabrication (FFF) system, is designated and linear movement is performed. As the material to be discharged from the nozzle, a general resin having a relatively low temperature and viscosity does not require such strict control. Therefore, the following description is given of an example in which a resin (material A illustrated in FIG. 28) such as a super engineering plastic having a high discharge temperature and a high viscosity is used.

The target temperature of the heating of the material A by laser emission is set to 320°C at which the material is not deteriorated in consideration of a certain margin. The lower limit temperature is about 250°C at which strength is obtained. When the ambient temperature is room temperature, the laser is emitted to raise the surface temperature to 320°C. When the laser emission is stopped, the temperature falls to 250°C in about 0.3 seconds. Therefore, the material is discharged within about 0.3 seconds.

As illustrated in FIG. 30, when moving two straight lines formed by three points, the laser would be located at the coordinates of X(t + 0.3) and Y(t + 0.3) assuming that the nozzle coordinates at a given time t are X(t) and Y(t) and the laser goes ahead of the nozzle by 0.3 seconds. The laser coordinates ($N_x(t)$, $N_y(t)$) are defined as the difference between the nozzle position and the laser position because the center of the discharge nozzle 34 is defined as the origin. Therefore, the laser coordinates are calculated using the following Expression 1.

$$N_x(t) = X(t+0.3) - X(t), \quad N_y(t) = Y(t+0.3) - Y(t) \cdots \text{Expression 1}$$

Next, a description is given of switching control of two lasers on the left and right. The description assumes that the movement between the coordinates takes 0.3 seconds or more, which is the time by which the laser goes ahead of the nozzle. The laser is switched under this condition when any one of the following two conditions is satisfied. The following Expression 2 represents a conditional expression when the sign of the Y-axis changes. The following Expression 3 represents a conditional expression when exiting from movement on the X-axis.

$$(Y_{n-1} - Y_n) \times (Y_{n+1} - Y_n) > 0 \cdots \text{Expression 2}$$

$$Y_{n-1} - Y_n = 0 \text{ and } (Y_{n-2} - Y_n) \times (Y_{n+1} - Y_n) > 0 \cdots \text{Expression 3}$$

Further, the sign of the Y-axis changes at the timing when the coordinates of the nozzle and the laser become parallel to the X-axis during movement on the second straight line illustrated in FIG. 10. Also, when exiting the movement on the X-axis, the laser switches at the beginning of the straight line. As described above, there are two types of timings at which laser switching occurs, that is, when switching is performed from the beginning of a straight line and when switching is performed halfway on a straight line.

Next, a description is given of a case of moving a short straight line, that is, a case where the movement between coordinates is less than 0.3 seconds. Such a case is essentially the same as the case where it takes 0.3 seconds or more. When the discharge nozzle 34 and the laser source 44 are arranged side by side, it is determined which laser is used depending on the next positional relationship between the discharge nozzle 34 and the laser source 44, that is, whether switching occurs. The time t at which the switching occurs is when the condition illustrated in the following Expression 4 or 5 is satisfied. The following Expression 4 represents a conditional expression when the sign of the Y-axis changes. The following Expression 5 represents a conditional expression when the speed in the Y direction differs between the nozzle and the laser.

$$Y(t) = Y(t+0.3) \cdots \text{Expression 4}$$

$$dY(t) / dt \neq dY(t+0.3) / dt \cdots \text{Expression 5}$$

By transforming the above Expression 5, dY(t) / dt - dY(t+0.3) / dt. Which laser is used can be determined based on the sign of the value obtained from the expression. Switching of the laser is performed when a different laser from the current state is used. Such a concept of switching is the same even when the movement is a curve or the like in a configuration in which two laser sources 44 are provided across the nozzle.

As described above, appropriate control of the laser position allows control of the temperature decrease of the material heated by the laser emission. Such control also reduces the margin of variation in temperature drop, thus allowing the target value to have a margin.

So far, how the laser position is controlled with respect to the temperature decrease after the laser emission and heating for 2 seconds illustrated in FIG. 28 has been described. As long as the temperature heated by the laser before the discharge from the nozzle is equal to or higher than the target temperature, any other control than the control of the laser position may be performed. Therefore, for example, the heating by laser emission may be controlled.

The target value of the heating temperature (contact temperature with the material) by the laser is determined as a temperature at which the fabricating strength is enhanced in consideration of the cooling of the material due to the movement of the laser or other variations. The temperature at which the fabricating strength is enhanced is a temperature at which the entanglement of the molecules constituting the material is sufficiently promoted. Further, the target value is determined as a temperature at which the material does not change or within a permissible range even if the material changes. Note that the heating range is a range in which the shape of the fabrication object can be maintained.

From the above, on the heating side by laser emission, parameters such as the heating energy, the heating range, the heating time (laser speed), the heat capacity of the target (material) to be heated, the absorptance of the laser light, and the propagation (way of transfer) of heat generated by the shape of the fabrication object (lower layer 47) can be controlled. Such control allows the heating temperature to be controlled to a target value while maintaining the shape of the fabrication object.

The heating energy is expressed as a time integral of the laser emission intensity. The heating energy can be roughly determined by the emission range of the laser and the moving time of the laser (how much emission is performed).

Accordingly, if the same range is continuously irradiated with the laser at the same intensity, the nozzle speed would become low, and if the laser emission speed becomes low, the energy input to the fabrication object would become excessive and the fabrication object would be excessively heated.

Hence, when the laser emission speed changes, at least one of the laser emission range and the laser intensity can be appropriately controlled to more precisely control the heating temperature of the fabrication object.

The temperature of the fabrication object before heating varies depending on the fabricating procedure. This is because the time elapsed since the material was discharged differs depending on the fabricating procedure. Therefore, at least one of the laser emission range and the laser intensity can be controlled in consideration of the temperature before heating.

The temperature before heating of the fabrication object can be obtained using a method of actually measuring the temperature immediately before heating, a method of measuring the temperature at an arbitrary timing such as every time one layer is laminated and estimating from the measurement result and the shape of the fabrication object, etc. Since the above-described methods are examples, any other method may be used as long as the temperature before heating can be obtained.

If the temperature heated by the laser before the discharge from the nozzle is equal to or higher than the target temperature, the time from the laser emission to the discharge of the material may be kept constant. In such a configuration, when the nozzle speed increases, control is performed so that the nozzle and the laser emission position are separated away, and when the nozzle speed decreases, control is performed so that the nozzle and the laser emission position approach.

However, if the nozzle and the laser emission position are too close to each other, interference between the nozzle and peripheral components would occur. In such a case, it is desirable to set a threshold value for the distance between the nozzle and the laser emission position and to change the heating method when the threshold value is exceeded. Examples of the change in the heating method include a change in the heating range and a change in the heating energy.

As illustrated in FIG. 29, the laser source 44 and the nozzle are moved by the carriage 132 without changing the attitude of the laser source 44 (the angle of projection of the laser source 44 on the XY plane) in order to make the laser movement range as small as possible. Accordingly, the movement of the laser source 44 coincides with the movement of the laser emission range, and the movement of the laser emission range is a range preceding the nozzle by 0.3 seconds. Therefore, the movement of the laser source 44 may be in a very narrow range.

On the other hand, if the laser source 44 is continuously operated without changing the attitude, the laser source 44 cannot go around the opposite side of the nozzle. Therefore, in order to cope with the movement of the nozzle in all directions, a plurality of laser sources 44 is mounted. In the configuration illustrated in FIG. 29, two laser sources 44 are mounted to deal with such a situation.

As illustrated in FIG. 29, in order to emit a laser to a position preceding and close to the nozzle, the nozzle and the laser source 44 are arranged at positions close to each other. However, each of the nozzle and the laser source 44 has a certain diameter, and there is a limit even if the nozzle and the laser source 44 are arranged at close positions. Therefore, the laser source 44 is arranged so as to emit the laser at a certain angle (from obliquely) to a target emission position with respect to the plane on which the fabrication object is formed.

The laser source 44 is configured so that the laser is condensed by a lens and is emitted to the target emission position. If a general lens is used as the lens, the lens would have an elliptical shape that is long in the emission direction on the emission surface. When the laser emission range is elliptical on the emission surface, the heating range and the heating time become uneven between when the laser source 44 moves in the long axis direction of the elliptical shape and when the laser source 44 moves in the short axis direction of the elliptical shape.

Hence, an anamorphic lens (which changes the shape of the emission range to be vertically long or horizontally long) is used. The lens compresses or expands the elliptical shape of the laser emission range on the emission surface in the vertical or horizontal direction to convert the elliptical shape of the laser emission range into a circle.

In the example illustrated in FIG. 29, the plurality of laser sources 44 is mounted on the carriage 132, and the laser sources 44 are switched for use. Therefore, only one of the laser sources 44 is used at a time, and the other is not used. The laser source 44 can be driven by a drive source and can be driven even when the laser source 44 is not used.

Therefore, a cooling device to cool the fabrication object may be attached to the drive source, and the material immediately after being discharged from the nozzle can be cooled while the laser source 44 is not used. One laser source 44 emits the laser to a position ahead of the nozzle while the other laser source 44 is not used during that time. The cooling device attached to the drive source of the other laser source 44 emits a laser from the one laser source 44 to heat the lower layer 47. After the material is discharged from the nozzle onto the lower layer 47, the cooling device cools the discharged material. The cooling device has, for example, an air blower including a plurality of blades, sends cool air to the material, and cools the material with the air. The cooling device is not limited to such a configuration.

The same applies to the case in which the laser source 44 is switched to emit the laser from the other lase source 44 and heat the lower layer 47. After the material is discharged from the nozzle onto the lower layer 47, the cooling device attached to the drive source for driving the one laser source 44 cools the discharged material.

As described above, heating the material (lower layer 47) on the side to be discharged immediately before the discharge can enhance the interface strength. Meanwhile, cooling the material immediately after the discharge can stabilize the shape.

Several embodiments have been described above with the examples of the fabricating apparatus, the fabricating method, and the fabricating system, but embodiments of the present disclosure are not limited to the above-described embodiments. Therefore, other embodiments, additions, alterations, deletions, and the like that can be changed within the range conceivable by a person skilled in the art and exhibit the functions and effects of the present disclosure in any aspect are included in the scope of the present disclosure.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a TCP/IP signal carrying computer code over an IP network, such as the Internet. The carrier medium may also include a storage medium for storing processor readable code such as a floppy disk, hard disk, CD ROM, magnetic tape device or solid state memory device.

**Claims**

1. A fabricating apparatus (10) configured to fabricate a three-dimensional object, the apparatus comprising:

   a discharging device (13) configured to discharge a fabrication material to form a fabrication material layer;
   a heating device (23, 44, 90) configured to heat the fabrication material layer formed by the discharging device (13); and
   a controller (26) configured to control at least one of a heating range of the fabrication material layer heated by the heating device (23, 44, 90) and a heating energy applied to the fabrication material layer by the heating device (23, 44, 90) when the discharging device (13) discharges the fabrication material to laminate another fabrication material layer on the fabrication material layer heated by the heating device (23, 44, 90).

2. The fabricating apparatus (10) according to claim 1, further comprising:

   a detecting device (43) configured to detect a temperature of the fabrication material layer heated by the heating device (23, 44, 90); and
   a determination unit (51) configured to determine another heating range of the fabrication material layer heated by the heating device (23, 44, 90), based on the temperature detected by the detecting device (43),
   wherein the controller (26) is configured to change the heating range to said another heating range determined by the determination unit (51).

3. The fabricating apparatus (10) according to claim 2,
   wherein the determination unit (51) is configured to determine said another heating range based on at least one of input information of a shape of the three-dimensional object, setting information on a type of the fabrication material, setting information on a color of the fabrication material, and setting information on a discharge width of the fabrication material.

**4.** The fabricating apparatus according to claim 1,
wherein the heating device (23, 44, 90) is a laser source (44) and the controller (26) is configured to change an emission range of laser light of the laser source to change the heating range.

**5.** The fabricating apparatus according to claim 4,
wherein the laser source (44) includes a lens group including a plurality of lenses (62, 63) and the controller (26) is configured to change a position of the lens group.

**6.** The fabricating apparatus according to claim 4,
wherein the laser source (44) includes a plurality of lenses (62, 63) and the controller (26) is configured to change an interval between the plurality of lenses.

**7.** The fabricating apparatus according to claim 4,
wherein the laser source (44) includes a plurality of lenses (62, 63) and the controller (26) is configured to add a new lens (64) or remove at least one of the plurality of lenses to change an emission range of laser light of the laser source (44).

**8.** The fabricating apparatus according to any one of claims 1 to 3,
wherein the heating device (23, 44, 90) is an air source (70) and the controller (26) is configured to change a size of an outlet of air to change the heating range.

**9.** The fabricating apparatus according to any one of claims 1 to 3,
wherein the heating device (23, 44, 90) includes a plate (88) configured to press against and heat the fabrication material layer,
wherein the controller (26) is configured to change a size of the plate to change the heating range.

**10.** The fabricating apparatus according to any one of claims 1 to 3,
wherein the heating device (23, 44, 90) is an infrared lamp (90) and the controller (26) is configured to changing a position of the infrared lamp to change the heating range.

**11.** The fabricating apparatus according to claim 1, further comprising:

a first moving device (132) configured to move the discharging device (13); and
a second moving device (133 to 138) configured to the heating device (44),
wherein the heating device (44) and the second moving device (133 to 138) are mounted on the first moving device (132),
wherein the controller (126) is configured to control the second moving device (133 to 138) such that the heating device (44) moves ahead of the discharging device (13) by a predetermined time.

**12.** The fabricating apparatus according to claim 11, further comprising a plurality of heating devices (44) including the heating device,
wherein the controller (126) is configured to switch the plurality of heating devices (44) to heat the fabrication material layer according to a position of the discharging device (13).

**13.** The fabricating apparatus according to claim 11 or 12,
wherein the controller (126) is configured to control the at least one of the heating range of the fabrication material layer and the heating energy applied to the fabrication material layer, according to at least one of a moving speed of the heating device (44), a temperature of the fabrication material layer, and a shape of the fabrication material layer.

**14.** A fabricating system for fabricating a three-dimensional object, the system comprising the fabricating apparatus according to any one of claims 11 to 13.

**15.** A method of fabricating a three-dimensional object, the method comprising:

discharging a fabrication material to form a fabrication material layer;
heating the fabrication material layer formed by the discharging; and
controlling at least one of a heating range of the fabrication material layer heated by the heating and a heating energy applied to the fabrication material layer by the heating, when discharging the fabrication material to laminate another fabrication material layer on the fabrication material layer heated by the heating.

FIG. 1

# FIG. 2

**FIG. 3**

FIG. 4

FIG. 5

EP 3 736 107 A1

FIG. 6

EP 3 736 107 A1

# FIG. 7

# FIG. 8

# FIG. 9

START — S100

↓

FORM FIRST LAYER — S101

↓

MEASURE LOWER LAYER TEMPERATURE OF REGION ON WHICH DISCHARGE IS ABOUT TO BE PERFORMED — S102

↓

CALCULATE HEATING AMOUNT REQUIRED FOR HEATING — S103

↓

DETERMINE HEATING RANGE — S104

↓

INPUT HEATING RANGE TO HEATING SOURCE — S105

↓

HEAT LOWER LAYER — S106

↓

MEASURE LOWER LAYER TEMPERATURE AFTER HEATING — S107

↓

S108 DESIGNATED TEMPERATURE? —NO→

↓ YES

END — S109

# FIG. 10

START —— S200

↓

FORM FIRST LAYER —— S201

↓

MEASURE LOWER LAYER TEMPERATURE OF REGION ON WHICH DISCHARGE IS ABOUT TO BE PERFORMED —— S202

↓

CALCULATE TIME TO HEATING —— S203

↓

CALCULATE TEMPERATURE THAT DECREASES BY WHEN HEATING IS PERFORMED —— S204

↓

CALCULATE HEATING AMOUNT REQUIRED FOR HEATING —— S205

↓

DETERMINE HEATING RANGE —— S206

↓

INPUT HEATING RANGE TO HEATING SOURCE —— S207

↓

HEAT LOWER LAYER —— S208

↓

END —— S209

# FIG. 11

```
        ┌─────────────────┐
        │     START       │────  S300
        └─────────────────┘
                 │
                 ▼
     ┌───────────────────────┐
     │   FORM FIRST LAYER    │────  S301
     └───────────────────────┘
                 │
                 ▼
     ┌───────────────────────┐
     │  MEASURE LOWER LAYER  │
     │     TEMPERATURE AT    │
     │  POSITION DOWNSTREAM   │────  S302
     │   BY GIVEN DISTANCE    │
     └───────────────────────┘
                 │
                 ▼
     ┌───────────────────────┐
     │   CALCULATE TIME TO    │────  S303
     │       HEATING         │
     └───────────────────────┘
                 │
                 ▼
     ┌───────────────────────┐
     │ CALCULATE TEMPERATURE  │
     │THAT DECREASES BY WHEN  │────  S304
     │  HEATING IS PERFORMED  │
     └───────────────────────┘
                 │
                 ▼
     ┌───────────────────────┐
     │   CALCULATE HEATING    │
     │  AMOUNT REQUIRED FOR   │────  S305
     │       HEATING         │
     └───────────────────────┘
                 │
                 ▼
     ┌───────────────────────┐
     │   DETERMINE HEATING    │────  S306
     │        RANGE          │
     └───────────────────────┘
                 │
                 ▼
     ┌───────────────────────┐
     │  INPUT HEATING RANGE   │────  S307
     │   TO HEATING SOURCE    │
     └───────────────────────┘
                 │
                 ▼
     ┌───────────────────────┐
     │    HEAT LOWER LAYER    │────  S308
     └───────────────────────┘
                 │
                 ▼
        ┌─────────────────┐
        │      END        │────  S309
        └─────────────────┘
```

# FIG. 12

START — S400

↓

FORM FIRST LAYER — S401

↓

MEASURE LOWER LAYER TEMPERATURE OF REGION ON WHICH DISCHARGE IS ABOUT TO BE PERFORMED — S402

↓

CALCULATE HEATING AMOUNT REQUIRED FOR HEATING — S403

↓

DETERMINE HEATING RANGE — S404

↓

INPUT HEATING RANGE TO HEATING SOURCE — S405

↓

HEAT LOWER LAYER — S406

↓

END — S407

# FIG. 13

DEVELOPMENT LINE OF HIGH
LAMINATION STRENGTH

TEMPERATURE OF LAMINATION INTERFACE (°C)

TIME (t)

# FIG. 14A

EP 3 736 107 A1

FIG. 14B

# FIG. 15

| No. | DISCHARGE LINE | HEATING RANGE | CONCEPTUAL IMAGE | |
|-----|----------------|---------------|------------------|---|
| | | | ONE DISCHARGE LINE | HEATING RANGE |
| 1 | 1 | 1 | | |
| 2 | 2 | 2 | | |
| 3 | 3 | 3 | | |
| 4 | 1 | 2 | | |
| 5 | 1 | 0.5 | | |

EP 3 736 107 A1

FIG. 16

EP 3 736 107 A1

EP 3 736 107 A1

# FIG. 17

FIG. 18

FIG. 19

FIG. 20

EP 3 736 107 A1

# FIG. 21

FIG. 22

FIG. 23

FIG. 24A

FIG. 24B

# FIG. 25

# FIG. 26

START — S500

PICK UP IMAGE OF FILAMENT — S501

CALCULATE ROTATION AMOUNT — S502

ROTATE FILAMENT — S503

END — S504

# FIG. 27

T1

120

T2

# FIG. 28

FIG. 29

EP 3 736 107 A1

# FIG. 30

$(X_{n-1}, Y_{n-1})$

$(X_{n+1}, Y_{n+1})$

$(X_n, Y_n)$

Y

X

# FIG. 31

REAR SIDE
OF BODY

FRONT SIDE
OF BODY

REAR STAGE COORDINATE SYSTEM

$Z$

$Y_1$

$Y$

$X_1$

$Y_0$

NOZZLE MOVING DIRECTION

NOZZLE
CENTER

$X$   NOZZLE COORDINATE SYSTEM

$X_0$

FRONT STAGE COORDINATE SYSTEM

EP 3 736 107 A1

Europäisches
Patentamt

European
Patent Office

Office européen
des brevets

# PARTIAL EUROPEAN SEARCH REPORT

under Rule 62a and/or 63 of the European Patent Convention.
This report shall be considered, for the purposes of
subsequent proceedings, as the European search report

Application Number

EP 20 15 7074

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/193819 A2 (SABIC GLOBAL TECHNOLOGIES BV [NL]) 23 December 2015 (2015-12-23) * paragraphs [0033] - [0035], [0048]; figures 1,8 * | 1,11-15 | INV. B29C64/118 B29C64/295 B29C64/393 B33Y10/00 B33Y30/00 B33Y50/02 |
| X | DE 10 2017 122088 A1 (SCHAEFFLER TECHNOLOGIES AG [DE]) 19 July 2018 (2018-07-19) * paragraph [0031]; figure 1 * | 1,11-15 | |
| A | CN 107 718 541 A (UNIV FOSHAN) 23 February 2018 (2018-02-23) * paragraph [0035] * | 11 | |
| A | US 2017/334137 A1 (NYSTROM PETER J [US] ET AL) 23 November 2017 (2017-11-23) * paragraph [0045]; figure 3 * | 12 | |

TECHNICAL FIELDS
SEARCHED      (IPC)

B29C

## INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| The Hague | 30 September 2020 | Hartwell, Ian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

..........................................................................
& : member of the same patent family, corresponding
document

EPO FORM 1503 03.82 (P04E07)

Europäisches
Patentamt

European
Patent Office

Office européen
des brevets

**INCOMPLETE SEARCH
SHEET C**

Application Number

EP 20 15 7074

Claim(s) completely searchable:
        11, 12, 14

Claim(s) searched incompletely:
        1, 13, 15

Claim(s) not searched:
        2-10

Reason for the limitation of the search:

A clear meaning for the term "heating range" recited in claims 1-4, 8-10,
13 and 15 is not derivable from the application, with the result that a
meaningful search for these claims, and for claims 5-7 dependent on claim
4, is not possible (with the exception of claims 1,13 and 15 where
"heating energy" is recited as an alternative to "heating range").
Page 15, lines 13-14 of the application use the term "heating range"
ambiguously to denote both a feature and a parameter ("if ... the
diameter of the heating range is 2 ... the heating range is 2").
Page 15, line 10ff. states that "the heating range can be represented by
the ratio of the diameter to the discharge line (discharge width)".
However, this is not supported by figure 15: although the first three
examples all show a (circular) beam having a diameter equal to the width
of the discharge line, i.e. a ratio of beam diameter to discharge width
of unity, only the first of the three examples is indicated as having a
heating range of 1.
The heating range values of 1,2 and 3 for examples no. 1,2 and 3
indicated in figure 15 might have supported a possible interpretation of
"heating range" as a ratio of beam beam cross-sectional area to discharge
width were it not for example 5 of figure 15, which shows a beam of 0.5x
the diameter of example 1 and a range of 0.5 (rather than 0.25, equal to
the square of 0.5), which might have been expected had such an
interpretation applied.
Thus it is not possible to identify a clear, consistent meaning for the
term "heating range" that would allow a meaningful search to be carried
out in respect of claims reciting this term (with the exception of claims
1,13 and 15 where "heating energy" is recited as an alternative to
"heating range").

## ANNEX TO THE EUROPEAN SEARCH REPORT
## ON EUROPEAN PATENT APPLICATION NO.

EP 20 15 7074

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2020

| Patent document cited in search report | Publication date | Patent family member(s) | Publication date |
|---|---|---|---|
| WO 2015193819 A2 | 23-12-2015 | CN 106660268 A<br>EP 3154770 A2<br>JP 6338700 B2<br>JP 2017523063 A<br>KR 20170004015 A<br>US 2017157845 A1<br>US 2019381783 A1<br>WO 2015193819 A2 | 10-05-2017<br>19-04-2017<br>06-06-2018<br>17-08-2017<br>10-01-2017<br>08-06-2017<br>19-12-2019<br>23-12-2015 |
| DE 102017122088 A1 | 19-07-2018 | NONE | |
| CN 107718541 A | 23-02-2018 | NONE | |
| US 2017334137 A1 | 23-11-2017 | CN 107379517 A<br>JP 2017206011 A<br>US 2017334137 A1<br>US 2019263066 A1 | 24-11-2017<br>24-11-2017<br>23-11-2017<br>29-08-2019 |

EPO FORM P0459

For more details about this annex : see Official Journal of the European Patent Office, No. 12/82

**EP 3 736 107 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005335380 A